(19) Europäisches Patentamt
European Patent Office
Office européen des brevets

(11) **EP 2 749 983 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(51) Int Cl.:
***G05D 1/02*** *(2006.01)*

(21) Anmeldenummer: **13192436.7**

(22) Anmeldetag: **12.11.2013**

(54) **Verfahren und Vorrichtung zur Positionsbestimmung**

Device and method for determining position

Dispositif et procédé de positionnement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2012   DE 102012110860**

(43) Veröffentlichungstag der Anmeldung:
**02.07.2014   Patentblatt 2014/27**

(73) Patentinhaber: **Einhell Germany AG**
**94405 Landau / Isar (DE)**

(72) Erfinder: **Thannhuber, Markus**
**94405 Landau OT Fichtheim (DE)**

(74) Vertreter: **Fleuchaus, Michael A.**
**Fleuchaus & Gallo Partnerschaft mbB**
**Patent- und Rechtsanwälte**
**Steinerstrasse 15/A**
**81369 München (DE)**

EP 2 749 983 B1

**Beschreibung**

Die Erfindung betrifft ein Verfahren zur Bestimmung der Position und gegebenenfalls Orientierung eines beweglichen Objekts, insbesondere eines Roboters, Bei dem erfindungsgemäßen beweglichen Objekt kann es sich um ein Fluggerät, wie beispielsweise ein autonomes Fluggerät, einen Service-Roboter, einen Räumungs-Roboter, einen Rasenmäher, ein Schiff oder Ähnliches handeln,

Verfahren zur Bestimmung der Position eines beweglichen Objekts sind im Stand der Technik bekannt. Verbreitet sind beispielsweise Verfahren, die mittels GPS (Global Positioning System) die aktuelle Position auf der Grundlage von Signallaufzeitmessungen bestimmen. Diese Verfahren haben jedoch den Nachteil, dass sie, zum Beispiel, nicht sehr präzise arbeiten; üblicherweise wird dabei von einem Messfehler in der Größenordnung von mehreren Metern ausgegangen. Wenn Ortsauflösungen von deutlich unter einem Meter erforderlich werden, dann sind diese Verfahren ohne aufwändige Erweiterungen ungeeignet. Weiterhin gibt es Orte, an denen die GPS-Signale nicht oder nur schlecht zu empfangen sind; in diesen Orten sind GPS-basierte Verfahren nur schlecht oder überhaupt nicht einsetzbar.

Die EP1450228 offenbart ein Fahrzeug welches eine Steuerungsvorrichtung aufweist, die eine Sende-/Empfangseinrichtung aufweist und eine Mehrzahl von vom Fahrzeug getrennt angeordnete Reflexionseinrichtungen, Die Steuerungsvorrichtung bestimmt in einem ersten Schritt eine genäherte Position einer Reflexionseinrichtung in Bezug auf einen Ausgangspunkt, und in einem Nachfolgeschritt eine exaktere Position dieser Reflexionseinrichtung unter Verwendung eines Korrekturalgorithmus in Bezug auf den Ausgangspunkt.

Vor diesem Hintergrund ist es Aufgabe der vorliegenden Erfindung, ein Verfahren und eine Vorrichtung zur Anwendung des Verfahrens zur Verfügung zu stellen, mit dem die Nachteile des Standes der Technik zumindest teilweise überwunden bzw. verbessert werden und insbesondere die Position eines beweglichen Objekts mit einer verbesserten räumlichen Auflösung bestimmt werden kann.

Diese Aufgabe wird durch ein Verfahren gemäß Anspruch 1 gelöst. Bevorzugte Ausführungsformen der Erfindung sind Gegenstand der Unteransprüche. Zudem wird die Aufgabe durch ein Speichermedium gemäß Anspruch 13 und eine Vorrichtung gemäß Anspruch 14 gelöst.

Demnach weist ein erfindungsgemäßes Verfahren zur Bestimmung einer Position eines beweglichen Objekts innerhalb einer virtuellen Repräsentation eines Raumes folgende Schritte auf:

Bereitstellen einer virtuellen Repräsentation eines Raums mit Informationen über die Position wenigstens eines Referenz-Punkts, die der Position eines korrespondierenden Referenz-Markers in dem Raum im wesentlichen entspricht;

Berechnen einer erwarteten zweiten Position des Objekts innerhalb der virtuellen Repräsentation basierend auf einer aktuellen ersten Position und auf einem oder mehreren Parametern einer oder mehrerer Antriebseinheiten des beweglichen Objekts;

Berechnen von Winkel-Informationen der Position wenigstens eines Referenz-Punktes bezogen auf eine Achse des Objekts an der erwarteten zweiten Position innerhalb der virtuellen Repräsentation;

Bewegen des beweglichen Objekts in dem Raum zu einer zweiten Position, basierend auf einem oder mehreren Parametern der einen oder mehreren Antriebseinheiten des beweglichen Objekts;

an der zweiten Position, Ermitteln von Richtungs-Informationen des wenigstens einen Referenz-Markers in dem Raum bezogen auf die Achse des Objekts, durch wenigstens einen Sensor, der mit dem beweglichen Objekt verknüpft ist;

Identifizieren von n Referenz-Markern aufgrund der bestimmten Winkel-Informationen, für welche die ermittelten Richtungs-Informationen eine eindeutige Unterscheidbarkeit der jeweiligen Referenz-Marker erlauben;

Verwenden der ermittelten Richtungs-Informationen der identifizierten Referenz-Marker und der erwarteten zweiten Position des Objekts, um eine genäherte zweite Position des beweglichen Objekts innerhalb der virtuellen Repräsentation zu bestimmen.

Die erfindungsgemäße Positionsbestimmung basiert darauf, dass in einer virtuellen Repräsentation eines vorgegebenen Raums eine Art Karte dieses Raums, z.B. in einem kartesischen Koordinatensystem, bereitgestellt wird. In der Karte sind die Positionen von einem oder mehreren Referenz-Punkten eingetragen. Es gibt eine Entsprechung zwischen den Positionen realer Referenz-Marker in dem Raum, den die Karte repräsentiert, und denen der Referenz-Punkte in der virtuellen Repräsentation.

Die virtuelle Repräsentation ist in einem Speicher, auf den das genannte bewegliche Objekt während der Ausführung des erfindungsgemäßen Verfahrens mittelbar oder unmittelbar Zugriff hat, gespeichert. Dieser Speicher kann eine Festplatte sein, ein Flash-Speicher, ein SRAM- oder ein DRAM-Speicher, eine Kombination aus diesen Speichertypen oder ein anderer wiederbeschreibbarer Speicher.

Die Erstellung und Modifikation der virtuellen Repräsentation und insbesondere der Positions-Informationen der Referenz-Punkte wird in einer weiteren Patentanmeldung der gleichen Anmelderin beschrieben; in der vorliegenden Erfindung wird die virtuelle Repräsentation als gegeben angenommen.

Mittels der genannten virtuellen Repräsentation mit den Referenz-Punkten und hiermit korrespondierenden Referenz-Markern wird die Position eines erfindungsgemäßen beweglichen Objekts rechnerisch innerhalb der virtuellen Repräsentation bestimmt.

In einer Ausführungsform weisen die Referenz-Marker Reflektoren auf, die elektromagnetische Wellen oder Schallwellen reflektieren. Dabei kann ein breites Spektrum dieser Wellen eingesetzt werden, vorzugsweise aber Wellenlängen, bei denen die Reflektoren nicht allzu groß gewählt werden müssen. So kommen bei elektromagnetischen Wellen bevorzugt Mikrowellen, fernes oder nahes Infrarot, sichtbares Licht oder nahes Ultraviolett zum Einsatz; bei Schallwellen wird bevorzugt Ultraschall, besonders bevorzugt Schall mit Frequenzen von 15 bis 200 kHz, eingesetzt.

Als Reflektoren werden Retroreflektoren, insbesondere Tripelspiegel, verwendet, die elektromagnetische Wellen oder Schallwellen deutlich besser als ihre Umgebung reflektieren und bevorzugt auch eine direktionale Charakteristik der eintreffenden Strahlung bei der reflektierten Strahlung im Wesentlichen beibehalten. Je nach Art und Wellenlänge der verwendeten elektromagnetischen Wellen oder Schallwellen weisen diese Retroreflektoren verschiedene Ausgestaltungen auf. Wird beispielsweise sichtbares Licht oder nahes Infrarot verwendet, dann können diese Retroreflektoren insbesondere als Rückstrahler, Reflektorfolien oder als sog. Katzenaugen ausgestaltet sein. Werden Schallwellen zur Detektion verwendet, dann kommen entsprechende Schall-Reflektoren zum Einsatz, beispielsweise ein oder mehrere nach vorne offene Tetraeder, die - ähnlich wie im vorhergehenden Fall - an räumlich unveränderlichen oder räumlich veränderlichen Gegenständen angebracht sind.

Die Referenz-Marker mit den Retroreflektoren können räumlich unveränderlich oder räumlich veränderlich ausgestaltet sein. Wird beispielsweise sichtbares Licht oder nahes Infrarot verwendet, dann können die genannten Reflektoren entweder auf räumlich unveränderlichen Gegenständen - wie z.B. einem Gebäude oder Zaun - oder auf räumlich veränderlichen Gegenständen - wie z.B. einem Pfosten oder Pylon - angebracht sein. Dabei können die räumlich veränderlichen Referenz-Marker entfernt oder bewegt werden, oder es können auch weitere Referenz-Marker hinzugefügt werden. Etwaige Veränderungen der virtuellen Repräsentation in Folge eines Entfernens, Bewegens oder Hinzufügens von Referenzmarkern werden, wie bereits erwähnt, in einer weiteren Patentanmeldung der gleichen Anmelderin beschrieben.

Die im Zusammenhang mit der Erfindung eingesetzten Detektionssysteme sind auf die verwendeten Strahlungsarten, Wellenlängen und Reflektoren abgestimmt. So weist eine bevorzugte Ausführungsform des Detektionssystems als Sender mindestens eine Strahlungsquelle, bevorzugt eine kollimierte Quelle für elektromagnetische Strahlung, wie beispielsweise einen Laser oder einen Maser auf. Bevorzugt wird die Strahlung durch einen geeigneten Mechanismus, wie beispielsweise ein Scansystem oder ein System rotierender Reflektoren in wenigstens einer Ebene ausgefächert, so dass eine Detektion über einen vorgegebenen Winkelbereich oder Raumwinkelbereich erzielbar ist. Weiterhin weist das Detektionssystem mindestens einen zur Strahlungsquelle korrespondierenden Strahlungssensor auf, der dazu eingerichtet ist, beispielsweise von einem Reflektor eines Referenz-Markers zurückreflektierte Strahlung der Strahlungsquelle zu detektieren. Das Detektionssystem ist dabei dazu eingerichtet, die Richtung der empfangenen Strahlung mit Bezug auf eine definierte Achse des Detektionssytems zu ermitteln, wobei die Richtung sowohl eine Azimut- als auch eine Elevationskomponenten umfassen kann.

Beispielsweise sind Strahlungsquelle und/oder Strahlungssensor auf einem in kontinuierliche Rotation versetzten Detektionskopf angeordnet, wobei der Detektionskopf mit einer Winkelmesseinrichtung direkt oder mittelbar verbunden ist, so dass die Stellung des Detektionskopfes zu jedem Zeitpunkt bestimmbar ist. Gleichermaßen kann statt einer dedizierten Winkelmesseinrichtung auch ein Synchron- oder Schrittmotor für den Antrieb des Detektionskopfes verwendet werden, welcher inhärent die Kenntnis über die Winkelposition des Rotors zu jedem Zeitpunkt gewährleistet.

Wird bei einem derartigen Detektionssystem das Licht von dem Reflektor eines Referenz-Markers reflektiert, dann wird durch die Winkelmesseinrichtung des Detektionssystems als Richtungs-Information der Winkel am Scheitel der Intensität des reflektierten Lichts bestimmt, bezogen auf eine Achse des beweglichen Objekts. Bei Fahrzeugen erfolgt eine Rotation des Detektionskopfes, bevorzugt um die Gierachse des Fahrzeugs, beispielsweise mit einer Frequenz von 1 bis 100 Hz, bevorzugt mit einer Frequenz von 5 bis 70 Hz, weiter bevorzugt mit einer Frequenz von 10 bis 40 Hz, und besonders bevorzugt mit einer Frequenz um etwa 20 Hz.

Bei einer Weiterbildung des Detektionssystems kann die Rotation des Detektionskopfes um die Gierachse überdies mit einem Nicken überlagert werden, so dass aus Sicht des Detektionskopfes eine sinus- oder dreiecksförmige Abtastung der Umgebung erfolgt, wobei eine zur Winkelmesseinrichtung korrespondierende Elevationsmesseinrichtung vorgesehen ist, durch die das Detektionssystem als Richtungsinformation sowohl Azimut als auch Elevation der reflektierten Strahlung am Scheitel ihrer Intensität bezogen auf eine Achse des beweglichen Objekts bestimmen kann. In einer Ausführungsform ist dabei die Frequenz der Nickbewegung ein nicht-ganzzahliges Vielfaches der Frequenz der Rotationsbewegung, so dass im zeitlichen Verlauf ein in zumindest einem gewissen Maße lückenloses Abtasten eines Raumwinkelsegments durch das Detektionssystem erfolgt.

Auf diese Weise können bei einem Fahrzeug oder sonstigen Objekt auch Reflektoren außerhalb einer Detektionsebene erkannt werden. Bei einem in 3 Dimensionen beweglichen Objekt ist damit eine Lokalisierung von Reflektoren bezüglich einer Bezugsachse des Objekts in zumindest einem erheblichen Raumwinkelsegment oberhalb und/oder unterhalb des Objektes möglich.

In einer weiteren erfindungsgemäßen Ausführungsform ist das Detektionssystem auf einem anderen Objekt montiert, aber mit dem beweglichen Objekt bezugsfest verbunden. Hierbei ist das Detektionssystem mit dem beweglichen Objekt über eine Kommunikationsverbindung verknüpft.

Bei dem erfindungsgemäßen Verfahren wird zunächst eine erwartete zweite Position des Objekts auf der Grundlage einer vorbekannten aktuellen ersten Position des Objekts in der virtuellen Repräsentation berechnet, an der das bewegliche Objekt erwartet wird, nachdem es auf der Grund lage vorgegebener Antriebsparameter wenigstens eines Antriebs des Objekts bewegt wurde.

Das bewegliche Objekt befindet sich also zunächst an einer aktuellen ersten Position im Raum, die einer aktuellen ersten Position in der virtuellen Repräsentation entspricht. Diese erste Position kann entweder, z.B. als Startposition, direkt in die virtuelle Repräsentation eingegeben worden sein, sie kann aber auch durch einen Scan-Vorgang und/oder durch vorausgehende weitere Berechnungen, wie sie beispielsweise weiter unten erläutert werden, bestimmt worden sein.

Von dieser aktuellen ersten Position im Raum ausgehend kann sich das bewegliche Objekt in Richtung einer zweiten Position im Raum, entsprechend einer zweiten Position in der virtuellen Repräsentation, bewegen, mittels einer oder mehrerer Antriebseinheiten. Die Ausgestaltung dieser Antriebseinheiten hängt dabei stark von der Ausführungsform des beweglichen Objekts ab: Bei einem Flugobjekt können typischerweise Rotoren, Propeller oder Düsen zum Einsatz kommen, während bei Fahrzeugen, wie zum Beispiel einem Rasenmäher beispielsweise mittels eines Motors angetriebene Ketten oder Räder zum Einsatz kommen können.

Die beschriebenen Antriebseinheiten werden dabei auf eine solche Weise angesteuert, dass das bewegliche Objekt einer vorgegebenen Bewegungsbahn folgt, z.B. einer Geraden oder einer Kurve mit vorgegebenen Radius. Dazu besitzt das bewegliche Objekt wenigstens eine zentrale Steuerungseinheit, mittels derer verschiedene Parameter der Antriebseinheiten - z.B. die aktuelle Geschwindigkeit, die aktuelle Richtung, oder aber unterschiedliche Geschwindigkeiten auf einzelnen Ketten oder Rädern - angesteuert werden können. Die Parameter der auf diese Weise angesteuerten Antriebseinheiten werden dabei von der zentralen Steuerungseinheit ausgegeben. Zusammen mit der genannten ersten Position in der virtuellen Repräsentation und diesen Parametern kann berechnet werden, an welcher erwarteten zweiten Position (in der virtuellen Repräsentation) sich das bewegliche Objekt nach einer vorgegebenen Zeitspanne -z.B. nach einer Sekunde - erwartungsgemäß befinden wird.

Nach der Berechnung der erwarteten zweiten Position innerhalb der virtuellen Repräsentation werden die in dervirtuellen Repräsentation vorgesehenen Referenz-Punkte verwendet, um, von der erwarteten zweiten Position aus, fürjeden dieser Referenz-Punkte zu berechnen, unterwelchem Winkel er dem beweglichen Objekt - bezogen auf eine vorgegebene Bezugs-Achse des beweglichen Objekts - innerhalb der virtuellen Repräsentation aus erscheint, d.h. welche Winkel-Informationen von dem mit dem beweglichen Objekt verknüpften Detektionssystem, für jeden einzelnen Referenz-Marker im Raum, an einer zur erwarteten zweiten Position korrespondierenden zweiten Position im Raum bei einem Detektionsvorgang geliefert werden müssten.

Vorzugsweise wird dabei auch ermittelt, ob an bestimmten erwarteten zweiten Positionen des beweglichen Objekts zwei oder mehr der Referenz-Marker bzw. Reflektoren im wesentlichen auf einer Linie liegen könnten, so dass diese Referenz-Marker an diesen erwarteten zweiten Positionen nicht eindeutig unterscheidbar wären, d.h. ein detektiertes Signal nicht eindeutig einem Referenz-Marker zugeordnet werden könnte. Damit ist es möglich, in derartigen Konstellationen Winkelmessungen des Detektionssytems, wie sie nachfolgend erfolgen, mit Winkel-Informationen, die eine eindeutige Zuordnung der Reflektoren bzw. Referenz-Marker nicht erlauben, für weitere Berechnungen im Rahmen des erfindungsgemäßen Verfahrens gesondert zu behandeln, beispielsweise nicht zu verwenden oder aber nur mit einer geringeren Gewichtung zu verwenden. Dies erfolgt im Rahmen eines weiter unten beschriebenen Identifikations-Schritts.

Das bewegliche Objekt wird nach der Berechnung der erwarteten zweiten Position auf der Grundlage der vorgegebenen und zuvor im Rahmen der Berechnungen verwendeten Antriebsparameter in dem Raum zu einer zweiten Position bewegt. Dazu werden die genannten Antriebseinheiten des beweglichen Objekts mit den Parametern angesteuert und damit die vorgegebene Bewegungsbahn zurückgelegt.

An derzweiten Position im Raum werden dann durch wenigstens einen Sensor und bevorzugt ein Detektionssystem, der bzw. das mit dem beweglichen Objekt verknüpft ist Richtungs-Informationen des wenigstens einen Referenz-Markers (bzw. dessen Reflektors) in dem Raum bezogen auf die vorgegebene Bezugs-Achse des Objekts ermittelt.

Dazu tastet das bewegliche Objekt mittels des Detektionssystems, wie zuvor beschrieben, seine Umgebung nach Referenz-Markern bzw. Reflektoren ab und bestimmt dabei, aus welchen Richtungen, also unter welchen Winkeln - bezogen auf die vorgegebene Bezugs-Achse des Objekts - reflektierte Signale von den Reflektoren der Referenz-Marker detektiert werden.

Hierbei kann mitunter nur eine Teilmenge der Referenz-Marker in dem Raum detektiert werden, weil beispielsweise einige der Referenz-Marker, von der zweiten Position aus gesehen, durch anderweitige, für die verwendete Strahlung nicht transparente Objekte (Bäume, Büsche, Hügel, Gebäude, Schilder, Zäune, umherlaufende Tiere, etc.) verdeckt sind.

Nach dem Scan-Vorgang werden in einem weiteren Berechnungsschritt aufgrund der zuvor bestimmten Winkel-Informationen die n Referenz-Marker identifiziert für welche die ermittelten Richtungs-Informationen eine eindeutige Unterscheidbarkeit der jeweiligen Referenz-Marker erlauben.

Dabei werden aus den detektierten Richtungs-Informationen diejenigen ausgewählt, die - nach den oben erläuterten Berechnungen, auf der Basis der Karte der Referenz-Punkte in der virtuellen Repräsentation auf Grund ihrer Winkel-Informationen - eindeutig unterscheidbar sind. Wenn also beispielsweise zwei oder mehr Referenz-Punkte in der virtuellen Repräsentation, von der zweiten Position des beweglichen Objekts aus gesehen auf einer Line liegen oder aber in der Sichtlinie des Detektionssystems sehr nahe beieinander, so dass eine Unterscheidung beispielsweise aufgrund des Winkelauflösungsvermögens des Detektionssystems nicht klar möglich ist, dann sind die entsprechenden Referenz-Marker im Raum nicht eindeutig identifizierbar. Daher werden sämtliche Signale aus dieser Richtung für die Positionsbestimmung nicht verwendet sondern lediglich die identifiziert, welche bekannten Referenz-Markern klarzuordenbarsind.

Schließlich werden die ermittelten Richtungs-Informationen der identifizierten Referenz-Marker und die erwartete zweite Position des Objekts verwendet, um eine genäherte zweite Position des beweglichen Objekts innerhalb der virtuellen Repräsentation zu bestimmen, welche so gut wie möglich repräsentativ für die Position des beweglichen Objekts in dem Raum ist.

Die erwartete zweite Position des beweglichen Objekts in dervirtuellen Repräsentation wird also mittels der ermittelten Richtungs-Informationen der identifizierten Referenz-Marker im Raum korrigiert, so dass damit eine verbesserte, genäherte zweite Position des beweglichen Objekts in der virtuellen Repräsentation bestimmt wird. Je nachdem wie viele Referenz-Marker bei dem Scan-Vorgang eindeutig identifiziert werden konnten, werden unterschiedliche Methoden zur Bestimmung der genäherten Position des beweglichen Objekts verwendet. Darüber hinaus wirkt sich die Zahl der identifizierten - und damit in der Berechnung berücksichtigten - Referenz-Marker auf die Genauigkeit der Korrektur der erwarteten zweiten Position aus.

Auf einige Beispiele für Methoden zur Bestimmung der genäherten Position des beweglichen Objekts wird weiter unten im Detail eingegangen.

Das erfindungsgemäße Verfahren bringt den Vorteil, dass es, selbst für den Fall einer relativ geringen Anfangsgenauigkeit und trotz des Vorhandenseins von Störeinflüssen - wie z.B. Bodenunebenheiten, Wind, Schlupf, Drift, Abweichung durch begrenzte Auflösung von Steuerungs-parametern von Antriebs-Aktuatoren, etc. - möglich wird, zu jedem Zeitpunkt eine von einem ersten Punkt ausgehende zweite Position des beweglichen Objekts im Raum innerhalb der virtuellen Repräsentation in Form einer genäherten zweiten Position mit recht hoher Genauigkeit zu bestimmen.

In einer bevorzugten Ausführungsform der Erfindung wird neben der Position des beweglichen Objekts in der virtuellen Repräsentation auch die Orientierung des beweglichen Objekts in der virtuellen Repräsentation errechnet. Dazu erfolgt eine Berechnung einer erwarteten zweiten Orientierung der Achse des beweglichen Objekts innerhalb der virtuellen Repräsentation, basie-rend auf einer aktuellen ersten Orientierung der Achse des beweglichen Objekts und auf dem einen oder der mehreren Parametern der einen oder mehreren Antriebseinheiten des beweglichen Objekts. Bevorzugt ist die hier in Bezug genommene Achse des beweglichen Objekts gleichzeitig die vorgegebene Bezugs-Achse.

In ähnlicher Weise, wie bei der oben beschriebenen Ausführungsform auf der Grundlage der ermittelten Richtungs-Informationen der identifizierten Referenz-Markereine Berechnung einer genäherten zweiten Position des beweglichen Objekts in der virtuellen Repräsentation erfolgt wird dann mit den ermittelten Richtungs-Informationen und der erwarteten zweiten Orientierung der Achse des Objekts eine genäherte zweite Orientierung der Achse des beweglichen Objekts innerhalb der virtuellen Repräsentation bestimmt, und damit eine Korrektur der genäherten zweiten Orientierung vorgenommen, so dass eine verbesserte, genäherte zweite Orientierung des beweglichen Objekts in der virtuellen Repräsentation ermittelt werden kann, die die zweiten Orientierung des beweglichen Objekts im Raum möglichst akkurat wiedergibt.

Die Bestimmung der Orientierung des beweglichen Objekts wird dabei also analog zur Bestimmung derzweiten Position in der virtuellen Repräsentation durchgeführt. Die Schritte hierfür basieren gleichermaßen darauf, dass in der virtuellen Repräsentation des Raums die Karte dieses Raums - in einem geeigneten Koordinatensystem - vorliegt und in die Referenz-Punkte eingetragen sind.

In einer Weiterbildung erfolgt zudem an derzweiten Position ein ermitteln von Orientierungs-Informationen des Objekts mittels wenigstens eines Orientierungssensors, der mit dem beweglichen Objekt verknüpft ist. Der Orientierungssensor liefert dabei die Orientierungs-Informationen des Objekts, insbesondere bezogen auf ein absolutes Koordinatensystem, welches vorzugsweise mit dem Koordinatensystem in einer transformations-Beziehung steht, d.h. dass eine im absoluten Koordinatensystem ermittelte Orientierung des beweglichen Objekts in das Koordinatensystem der virtuellen Repräsentation so übergeführt werden kann, dass im Koordinatensystem der virtuellen Repräsentation die Orientierung bezüglich der Referenz-Punkte der Orientierung des beweglichen Objekts bezüglich der Referenz-Marker im wesentlichen entspricht.

Für das absolute Koordinatensystem kommt dabei beispielsweise das geomagnetische Koordinatensystem in Frage, welches über Korrektur-Matrizen, die sowohl die magnetisch störenden Elemente des beweglichen Objekts als auch die geomagnetischen Einflüsse berücksichtigen (Deviation), auf das Koordinatensystem der virtuellen Matrix transformierbar ist. Beispielsweise kann eine Ausführungsform des erfindungsgemäßen Objekts eine Karte mit Eintragungen der Deviation in Abhängigkeit der Position des Objekts in der virtuellen Repräsentation aufweisen. Damit wird es möglich, die ortsabhängige Deviation eines magnetischen Kompasses wenigstens teilweise zu kompensieren.

Bei dem Orientierungssensor handelt es sich bevorzugt um einen Kompass, besonders bevorzugt um einen magnetischen Kompass. In anderen Ausführungsformen kann der Orientierungssensor aber auch als Kreiselkompass, Gyroskop, Faserkreisel, Laserkreisel (Ringlaser) oder dergleichen ausgestaltet sein.

Nach der Bestimmung der Orientierungsinformationen mittels des Orientierungssensors erfolgt dann auf der Grundlage der ermittelten Orientierungs-Informationen und der erwarteten zweiten Orientierung des Objekts die Bestimmung einer genäherten zweiten Orientierung des beweglichen Objekts innerhalb der virtuellen Repräsentation. Dies dient der Korrektur der genäherten zweiten Orientierung, so dass eine verbesserte, genäherte zweite Orientierung des beweglichen Objekts in der virtuellen Repräsentation ermittelt werden kann, die die zweiten Orientierung des beweglichen Objekts im Raum möglichst akkurat wiedergibt.

Das Verfahren, mittels dessen eine genäherte zweite Orientierung des beweglichen Objekts in der virtuellen Repräsentation bestimmt wird, richtet sich bei einer Ausführungsform der Erfindung danach, wie viele Referenz-Marker beim Scan-Vorgang detektiert und/oder identifiziert wurden.

Insbesondere wird hierbei für den Fall, dass n = 1, eine Mehrzahl von möglichen Positionen innerhalb der virtuellen Repräsentation bestimmt, von denen aus der identifizierte Referenz-Marker unter der ermittelten Richtungs-Informationen erscheint, wobei die Mehrzahl der möglichen Positionen auf einer Geraden liegt. Für die Identifikation nur eines Referenzmarkers besteht damit eine unbekannte Positionierung des beweglichen Objekts auf einer Achse, welche die Position des identifizierten Referenzmarkers und die Position des beweglichen Objekts in dem Raum schneidet.

Für den Fall, dass n = 2 ist, wird eine Mehrzahl von möglichen Positionen innerhalb der virtuellen Repräsentation bestimmt, von denen aus die identifizierten Referenz-Marker unter deren ermittelten Richtungs-Informationen erscheinen, wobei die Mehrzahl der möglichen Positionen auf einem Kreisbogen liegt, und insbesondere einem Fasskreisbogen, welcher die Positionen der identifizierten Referenzmarker und die Position des beweglichen Objekts in dem Raum schneidet und zudem dadurch bestimmt ist, dass diese beiden identifizierten Referenz-Marker von jedem Punkt dieses Kreisbogens aus immer unter der gleichen differenziellen Richtungs-Information erscheinen.

Mit der genannten Vorschrift, dass der Kreisbogen die Positionen der identifizierten Referenz-marker und die Position des beweglichen Objekts in dem Raum schneidet und die beiden identifizierten Referenz-Marker von jedem Punkt dieses Kreisbogens aus immer unter der gleichen Differenz der Richtungs-Information erscheinen werden genau genommen zwei Fasskreisbögen definiert. Allerdings kann aufgrund der zuvor durchgeführte Berechnung der erwarteten zweiten Position des beweglichen Objekts einer der beiden Fasskreisbögen als unzutreffend eliminiert werden, nämlich der, dessen Mittelpunkt sich weiter von der erwarteten zweiten Position des beweglichen Objekts entfernt befindet.

Für den Sonderfall, dass die differenzielle Richtungsinformation, also die Winkeldifferenz zwischen den Richtungsinformationen der beiden identifizierten Referenzmarker 90° ist, trifft die vorstehende Konstruktionsvorschrift auf lediglich einen Kreisbogen zu, den Thateskreis, so eine Eliminierung eines Kreisbogens entfällt.

Für den Fall, dass n > 2 ist, wird eine Mehrzahl von möglichen Positionen innerhalb der virtuellen Repräsentation bestimmt, von denen aus jeweils zwei der identifizierten Referenz-Marker unter deren ermittelten Richtungs-Informationen erscheinen, wobei die Mehrzahl der möglichen Positionen auf einer Mehrzahl von Kreisbögen liegen, und insbesondere dabei die Mehrzahl der Kreisbögen jeweils die Positionen zweier identifizierter Referenzmarker und die Position des beweglichen Objekts in dem Raum schneiden.

Die Bestimmung der Kreisbögen und ggf. eine Eliminierung von unzutreffenden Kreisbögen erfolgt dabei nach dem gleichen Schema wie im vorstehend beschriebenen Fall (n=2), wobei vorliegend das Schema für jedes Paar von identifizierten Referenzmarkern, also jede unterschiedliche Permutation von jeweils zwei Referenzmarkern ermittelt wird.

Nach dieser Berechnung der Mehrzahl von möglichen Positionen innerhalb der virtuellen Repräsentation werden bei einer weiteren Ausführungsform der Erfindung die auf diese Weise bestimmten Punktmengen dafür genutzt, um die genäherte zweite Position des beweglichen Objekts innerhalb der virtuellen Repräsentation zu berechnen. Dazu wird in einem weiteren Schritt das Lot von der erwarteten zweiten Position auf die oben bestimmte Punktmenge gefällt, wodurch sich für n=l und n=2 genau ein Schnittpunkt der Punktmenge mit dem Lot ergibt und für n>2 fürjeden Kreisbogen, also jedes Paar von Referenz-Markern, je ein Schnittpunkt der Punktmenge mit dem Lot.

Durch diese Ermittlung des Schnittpunkts wird also einerseits bewirkt, dass aus der Menge der möglichen Positionen des beweglichen Objekts auch bei einer Verfügbarkeit von nur wenigen Referenz-Markern, die möglicherweise eine eindeutige Berechnung der Position nicht erlauben würden, diejenige Position ermittelt wird, die unter Berücksichtigung der vorhandenen Parameter und Messwerte näherungsweise die Position des beweglichen Objekts repräsentiert. Andererseits können durch diese Schnittpunktbildung etwaige mit der bloßen Berechnung der erwarteten zweiten Position auf der Grundlage von Antriebsparametern und unter Nicht-Berücksichtigung von Schlupf oder Drift eingeführte Ungenauigkeiten über die Position des beweglichen Objekts, minimiert werden, indem die erwartete zweite Position auf dem kürzesten Weg auf eine mögliche Position, wie sie auf der Grundlage der ermittelten Richtungs-Information ermittelt wurde, abgebildet wird, also eine Korrektur der erwarteten zweiten Position stattfindet, sofern diese von den ermittelten möglichen Positionen abweicht.

In einer Ausführungsform führt bereits die vorstehende Schnittpunktbildung zu einer deutlichen Verbesserung der Positionsbestimmung und kann ausreichend sein, um hierauf basierend die genäherte zweite Position mit verbesserter Genauigkeit anzugeben, nämlich als die Position des oder der so bestimmten Schnittpunkts bzw. Schnittpunkte.

In einer weiterbildenden Ausführungsform wird nach der Schnittpunktbildung jeweils das Mittel zwischen der erwarteten zweiten Position und dem Schnittpunkt gebildet. Für die Fälle n=l und n=2 wird dann das so gebildete Mittel als die genäherte zweite Position definiert. Für den Fall der Ermittlung mehrerer Schnittpunkte, also im Falle n>2, definiert der Schwerpunkt aller so gebildeten Mittel die erwarteten zweiten Position.

Bei dieser Ausführungsform wird demnach zu der möglichen Ungenauigkeit der Berechnung der erwarteten zweiten Position auch in Erwägung gezogen, dass die Richtungs-Informationen mit gewissen Fehlern behaftet sein können und derVersuch unternommen, durch die Bildung eines Mittels aller verfügbaren Eingangswerte für die Positionsbestimmung einen besonders akkuraten Wert für die genäherte zweite Position zu ermitteln.

Eine weitere Ausführungsform der vorliegenden Erfindung berücksichtigt weiterhin, dass sämtliche der vorstehend erwähnten Eingangswerte für die Berechnungen und/oder Messwerte mit Werteunsicherheiten - gegebenenfalls unterschiedlicher Größe - beaufschlagt sind. Das bedeutet, dass beispielsweise die Informationen über die Position von Referenz-Markern, die aktuelle erste Position, der oder die Parameter der einen oder mehreren Antriebseinheiten, die erwartete zweite Position, die Winkel-Informationen, die Richtungs-Informationen, die genäherte zweite Position, die aktuelle erste Orientierung, die erwartete zweite Orientierung, die Orientierungs-Informationen, die genäherte zweite Orientierung, die Mehrzahl von möglichen Positionen, der wenigstens eine Schnittpunkt, das wenigstens eine Mittel und/oder der Schwerpunkt durch mit Unsicherheiten beaufschlagte Werte repräsentiert werden können, insbesondere in der Form, dass ein mehrdimensionaler Wert mit entsprechenden Abweichungen in wenigstens einer Dimension angegeben ist, wobei die Abweichungen in den jeweiligen Dimensionen unterschiedlich oder aber auch gleich groß ausfallen können und, insbesondere in letzterem Falle auch als einheitlicher Wert mit Gültigkeit für alle Dimensionen angegeben sein können.

Bevorzugt werden die Unsicherheiten in sämtlichen Verfahrensschritten der vorliegenden Erfindung bei der Berechnung oder der Bestimmung von Werten auf geeignete Weise berücksichtigt und/oder fortgepflanzt, wobei eine Fortpflanzung in jedweder Weise erfolgen kann, die einen Fehler eines oder mehrerer Eingangswerte durch Kombination, Multiplikation, Addition, Wichtung oder sonstige mathematische Funktionen oder Simulationen auf einen Ausgangswert transformiert, gegebenenfalls unter Berücksichtigung gegenseitiger Beeinflussungen von Unsicherheiten der Eingangswerte. Insbesondere findet eine Fortpflanzung der Werteunsicherheiten im Rahmen der vorliegenden Erfindung bei der Berechnung oder der Bestimmung von Werten mittels dem Gauß'schen Fehlerfortpflanzungstheorem statt, so dass, vorzugsweise bei jedem Berechnungsschritt, die Auswirkung der Werteunsicherheiten der Eingangswerte auf die Ausgangswerte nach einer einheitlichen Fortpflanzungsregel abgebildet werden.

Es wird also für jede der errechneten Positionen und gegebenenfalls Orientierungen eine Fehlerberechnung durchgeführt und für jede Position bzw. Orientierung, als Ergebnis dieser Fehlerberechnung, wird wiederum eine Unsicherheit angegeben, bevorzugt in jeder Dimension. So werden beispielsweise auf die Unsicherheiten der aktuellen ersten Position zur Berechnung der erwarteten zweiten Position und der erwarteten zweiten Orientierung die Parameter der einen oder mehreren Antriebseinheiten addiert, die ihrerseits Unsicherheiten aufweisen.

Wie oben erwähnt können in die Unsicherheiten bezüglich Positionen und Orientierungen weiterhin die Unsicherheiten eingehen, die aus der Beschaffenheit des Untergrunds, bzw. bei Flugobjekten aus dem Einfluss von Wind, und aus weiteren Störungen resultieren.

Die hiernach errechnete erwartete zweite Position weist folglich wiederum Unsicherheiten auf.

Hinzu kommen können weiterhin Messunsicherheiten, die beispielsweise aus einer prinzipiell beschränkten Auflösung der Detektionssysteme und/oder Orientierungssensoren oder aber auch aus Streu- oder anderen Störeffekten resultieren können und durch die sämtliche detektierte Richtungs-Informationen bzw. Orientierungs-Informationen ebenfalls Unsicherheiten aufweisen können. Auch die Positionen der Referenz-Punkte in der virtuellen Repräsentation sind beispielsweise aufgrund der räumlichen Ausdehnung der Referenz-Marker bzw. deren Reflektoren mit Unsicherheiten beaufschlagt.

Durch die Berücksichtigung sämtlicher möglichen Fehlerquellen im Rahmen der Verfahrensschritte der vorliegenden Erfindung und deren Ausführungsformen wird der erfindungsgemäße Vorteil erzielt, dass trotz solcher Fehler und Ungenauigkeiten eine besonders hohe Genauigkeit der genäherten zweiten Position erzielt werden kann. Darüber hinaus wird nicht nur eine verbesserte Genauigkeit erzielt sondern auch eine hohe Robustheit gegenüber systematischen und/oder stochastischen Fehlern, Toleranzen des Detektionssystems, der Antriebs-Aktuatoren und/oder Einflüssen und Störungen von außen gewährleistet.

Die beschriebene Ausführungsform der vorliegende Erfindung berücksichtigt mögliche (und relevante) Störeinflüsse somit durch eine geeignete Gewichtung und Fortpflanzung derselben und sucht nicht kategorisch derartige Störeinflüsse zu vermeiden. Hierdurch kann ein hochflexibles und mitunter stark autonomes System realisiert werden, das auch für den Fall, dass beispielsweise nur wenige oder sehr ungenaue Eingangsparameter zur Bestimmung der genäherten zweiten Position zur Verfügung stehen veritable Ergebnisse bei der Bestimmung dieser genäherten zweiten Position erzielen kann.

Die genannten Mess- und/oder Werteunsicherheiten können dazu führen, dass es für jede Position eines Referenz-Markers auch Unsicherheiten für die ermittelten Richtungs-Informationen in Form von Winkelunsicherheiten gibt, die bei der Ermittlung von Richtungs-Informationen eine eindeutige Unterscheidbarkeit von Referenz-Markern nicht erlauben. Dies ist dann der Fall, wenn mehrere berechnete Winkel-Informationen in einem Winkelsegment oder Raumwinkelsegment liegen, dass aufgrund von Mess- und/oder Werteunsicherheiten für die bestimmten Richtungs-Informationen definiert wird.

Insoweit werden daher bei einer Ausführungsform der Erfindung im Rahmen der Berechnung der Winkel-Informationen mit entsprechenden Unsicherheiten Winkelsegmente bzw. Raumwinkelsegmente ermittelt, innerhalb derer Signale mehrerer Referenz-Marker bei der Bestimmung der Richtungsinformationen als nicht-eindeutig klassifiziert werden und entsprechend in Folge des Schritts der Identifizierung von Referenz-Markern für die nachfolgende Berechnung unberücksichtigt bleiben.

Wenn also zwei oder mehr Referenz-Marker, vom beweglichen Objekt aus gesehen, in einer ähnlichen Richtung liegen und sich die Fehlergrenzen der Unsicherheiten der ermittelten Richtungs-Informationen (aufgrund von Messfehlern, endlicher Reflektorgröße, etc.) überlappen, dann müssen Richtungs-Informationen, die innerhalb dieses Überlappungsbereichs liegen ohne weiteres als nicht unterscheidungskräftig angesehen werden insoweit als dass diese Richtungs-Informationen eine klare Aussage, welchem Referenz-Marker das empfangene Signal zuzuordnen ist, nicht erlauben.

An dieser Stelle sei erwähnt, dass unter Hinzuziehung weiterer Informationen, beispielsweise der Signalreihenfolge der Richtungs-Informationen beider Abtastung der Umgebung nach Referenz-Markern durch ein rotierendes Detektionssystem, trotz einer Überlappung von Fehlergrenzen von Richtungs-Informations-Unsicherheiten dennoch eine Identifikation einzelner Referenz-Marker in zumindest einigen Fällen möglich sein könnte, wenn z.B. die Messignale mit ausreichend hoherzeitlicher Auflösung abgetastet werden und hierauf basierend (in Verbindung mit den Richtungs-Informationen) eine Zuordnung der Messwertsignale zu den jeweiligen Referenz-Markern erfolgen kann.

In Fällen, bei denen kein Referenz-Marker (n=0) im Rahmen der Detektion erfasst und/oderwerden kann, kann eine Verbesserung der Positionsbestimmung über die Berechnung der erwarteten zweiten Position hinaus nicht erfolgen. Bei einer Ausführungsform der Erfindung wird dann nicht etwa die Positionsbestimmung abgebrochen oder das Verfahren einfach zyklisch weiter geführt, obgleich auch dies möglich wäre, sondern das Verfahren vielmehr von der ersten Position ausgehend mit einer dritten Position an Stelle der zweiten Position ausgeführt, wobei die dritte Position in chronologischer Sicht einen Schritt weiter entfernt ist, als die zweite Position.

Der Vorteil hiervon ist, dass sich hierdurch bei der Berechnung der erwarteten zweiten Position eventuell ergebende Ungenauigkeiten nicht ohne weiteres weiter in die Berechnung der dritten Position fortpflanzen (und dadurch häufig überproportional vergrößern), sondern dass sich durch die Berechnung der erwarteten dritten Position unmittelbar von der ersten Position ausgehend und basierend auf den Antriebsparametern der Antriebseinheit(en) und weiteren Störeinflüssen ergebende Ungenauigkeiten geringer ausfallen können und damit zu einer genaueren erwarteten dritten Position führen als dies beim Weg über die erwartete zweite Position der Falls ist.

Es werden bei dieser Ausführungsform also auch weiterhin die erfindungsgemäßen Berechnungen zur Bestimmung der Position des beweglichen Objekts in der virtuellen Repräsentation, einschließlich der Berechnungen der Fehlergrenzen, etc. durchgeführt, eine Korrektur aufgrund von Detektionen von Referenz-Markern findet allerdings nicht statt. Statt dessen werden die Berechnungen der Position des beweglichen Objekts in der virtuellen Repräsentation in einer solchen Weise fortgeführt, dass nicht von der erwarteten zweiten Position aus eine erwartete dritte Position berechnet wird, sondern vielmehr die erwartete dritte Position direkt von der ersten Position ausgehend berechnet wird und die erfindungsgemäßen Maßnahmen zur Verbesserung und Korrektur der Positionsbestimmung und Ermittlung der genäherten dritten Position dann an dieser dritten Position durchgeführt werden.

Wird auch an der dritten Position kein Referenz-Marker eindeutig erfasst und/oder identifiziert, dann wird bevorzugt an einer vierten, ggf. fünften, sechsten, etc. Position analog vorgegangen. Kann mehrere Male hintereinander kein Referenz-Marker identifiziert werden und überschreiten die im Rahmen der Berechnungen sich ergebenden Unsicherheiten eine bestimmte Schwelle, dann kann das bewegliche Objekt angehalten werden und/oder zur letzten Position zurückkehren, an der eine Erfassung und/oder Identifikation von Referenz-Markern noch erfolgreich durchgeführt werden konnte und damit auch eine genäherte Position des beweglichen Objekts innerhalb der virtuellen Repräsentation mit guter Genauigkeit bestimmbar war.

Durch diese Maßnahme wird nicht nur gewährleistet, dass sich das bewegliche Objekt jederzeit mit hoher Genauigkeit an einer bekannten Position in der virtuellen Repräsentation befindet, sondern es werden damit auch Indizien geliefert, an welchen Stellen im Raum zusätzliche Referenz-Marker erforderlich sein könnten.

In einer weiteren erfindungsgemäßen Ausführungsform bei der nach der Schnittpunktbildung jeweils das Mittel zwischen der erwarteten zweiten Position und dem Schnittpunkt mit der Mehrzahl von Positionen gebildet wird erfolgt die Bildung des Mittels unter Berücksichtigung einer Wichtung basierend auf den Unsicherheiten der erwarteten zweiten Position, der Mehrzahl von Positionen und/oder des Schnittpunkts.

Wenn also ein, zwei oder mehr als zwei Referenz-Marker (n=l, n=2, n>2) identifiziert wurden, und damit - wie oben erläutert - dahingehend verfahren wurde, dass die Schnittpunkte des Lots mit der errechneten Punktmenge berechnet wurden, dann stehen als Ergebnisse dieser Berechnungen die erwartete zweite Position und die Schnittpunkte des Lots, jeweils unter Angabe ihrer Unsicherheiten, zu Verfügung. Dabei ist eine errechnete Position mit kleineren Unsicherheiten als entsprechend genauer anzusehen als eine errechnete Position mit größeren Unsicherheiten.

Auf diese Weise wird gewährleistet, dass das erfindungsgemäße Verfahren Werte mit geringen Unsicherheiten stärker berücksichtig als solche mit großen Unsicherheiten, also Werte mit großen Unsicherheiten (unabhängig davon, ob diese intrinsisch sind oder sich durch Berechnungen fortgepflanzt haben) weniger starken Einfluss auf das Ergebnis nehmen - aber dennoch nicht unberücksichtigt bleiben - als solche mit geringen Unsicherheiten. Durch diese Form der gewichtete Mittelwertbildung wird daher das Ergebnis für die genäherte zweite Position nochmals weiter verbessert und überdies auch eine nochmals verbesserte Robustheit der Positionsbestimmung erzielt.

Das vorstehend beschriebene erfindungsgemäße Verfahren kann in einer Ausführungsform in einer solchen Weise angewandt werden, dass die Verfahrensschritte periodisch oder aperiodisch in vorbestimmten zeitlichen oder räumlichen Abständen wiederholt werden, so dass während einer Bewegung des beweglichen Objekts kontinuierlich dessen genäherte Position innerhalb der virtuellen Repräsentation bestimmt wird, wobei dies die Position im Raum bestmöglich repräsentieren soll. Dies ermöglicht, dass ein bewegliches Objekt das genannte Verfahren über einen weiten räumlichen Bereich und für eine lange zeitliche Dauer nutzen kann um seine eigene Position mit hoher Genauigkeit zu bestimmen, so dass sich daraus die vielfältigen erfindungsgemäßen Einsatzmöglichkeiten ergeben. Im besten Falle kann sich das bewegliche Objekt mit Hilfe des Erfindungsgemäßen Verfahrens vollständig autonom bewegen.

Bei einer solchen Ausführungsform der vorliegenden Erfindung, bei welcher eine kontinuierliche Bestimmung der genäherten Position des beweglichen Objekts innerhalb der virtuellen Repräsentation erfolgt ist es zudem möglich, dass die im Rahmen der wiederholten Abarbeitung der Verfahrensschritte erfassten Richtungs-Informationen der identifizierten Referenz-Marker in einer Speichereinrichtung gespeichert werden. Für den Fall einer periodischen Wiederholung der Verfahrensschritte in relativ kurzen zeitlichen Abständen ergibt sich damit ein Datensatz, welcher im wesentlichen sich kontinuierlich fortentwickelnde Werte für die jedem einzelnen Referenz-Markerzugeordneten Richtungs-Informationen aufweist.

Dieser Datensatz erlaubt es, eine prädiktive Vorhersage für die zukünftige Entwicklung der Richtungs-Informationen fürjeden Referenz-Marker vorzunehmen, beispielsweise durch Extrapolation, wobei die Vorhersagegenauigkeit von einer Vielzahl von Parametern abhängt und mit zunehmendem in die Zukunft gerichteten Zeitintervall abnimmt.

Eine derartige prädiktive Vorhersage der Entwicklung der Richtungs-Information für sämtliche Referenz-Marker kann in einer Weiterbildung dieser Ausführungsform auch Im Rahmen der Identifizierung von Referenz-Markern Verwendung finden, indem ein Abgleich oder eine Verarbeitung der ermittelten Richtungs-Informationen mit den prädiktiv vorhergesagten Richtungs-Informationen stattfinden kann und hiermit schlecht aufgelöste oder für sich genommen nicht eindeutig zuordenbare Richtungs-Informationen dennoch eine Identifizierung von Referenz-Markern erlauben können.

Bevorzugt ist die virtuelle Repräsentation, die für die verschiedenen vorstehenden Ausführungsformen der vorliegenden Erfindung zugrunde gelegt wird, ist eine zwei- oder mehrdimensionale Karte des Raums.

Die virtuelle Repräsentation, so wie sie hier beschrieben ist, kann verschiedene Formate aufweisen, beispielsweise orthogonale oder krummlinige Koordinatensysteme aufweisen, bevorzugt ein kartesisches Koordinatensystem, und besonders bevorzugt eine zweidimensionale oder dreidimensionale Karte, d.h. Repräsentation des Raums mit darin enthaltenen Hindernissen, Freiflächen oder Volumen, dessen Grenzen, etc. darstellen. Eine Repräsentation als zweidimensionale oder dreidimensionale Karte hat den Vorteil, dass Anwender einer erfindungsgemäßen Vorrichtung bei einer eventuellen Fehlfunktion sehr einfach den Inhalt der virtuellen Repräsentation auslesen und sehr intuitiv interpretieren können, wodurch Problemanalyse deutlich beschleunigt werden kann. Zudem sind derartige Karten einer Vielzahl von Räumen bereits zahlreich verfügbar und so kann das erfindungsgemäße System und Verfahren sich einer solchen bereits existenten virtuellen Repräsentation bereits zunutze machen, gegebenenfalls unter Hinzufügung von Positionsinformationen von Referenz-Markern.

Die vorliegenden Erfindung betrifft auch ein Speichermedium mit darin gespeicherten Befehlen zur Steuerung eines Prozessors, die bei Ausführung mittels des Prozessors das Verfahren nach einem der Ansprüche 1 bis 12 implementieren.

Schließlich betrifft die vorliegende Erfindung auch eine Vorrichtung mit Speichermitteln, Datenverarbeitungsmitteln enthaltend wenigstens einen Prozessor, wenigstens eine Antriebseinheit zur Fortbewegung der Vorrichtung, wenigstens einen Sensor zur Erfassung von Richtungs-Informationen und, optional, wenigstens einen Orientierungssensor zur Erfassung von Orientierungs-Informationen, wobei die Speichermittel Befehle zur Steuerung eines Prozessors enthalten, die bei Ausführung mittels des Prozessors ein Verfahren nach einem der Ansprüche 1 bis 13 implementieren, und wobei die Datenverarbeitungsmittel die wenigstens eine Antriebseinheit zur Bewegung der Vorrichtung ansteuern.

Dazu kommen bevorzugt Datenverarbeitungsmittel und Speichermittel zur Anwendung, die sich auf dem beweglichen Objekt befinden oder damit über eine geeignete Kommunikationsverbindung verbunden sind, so dass eine Steuerung des Antriebs des beweglichen Objekts durch Kontrollbefehle der Datenverarbeitungsmittel beispielsweise vermittels Antriebsparametern erfolgen kann und/oder Signale und Ausgabe-Informationen des Sensors zur Erfassung von Richtungs-Informationen und gegebenenfalls des Orientierungssensors an die Datenverarbeitungsmittel übermittelt werden können.

Die verschiedenen Elemente der erfindungsgemäßen Vorrichtung können für bestimmte Zwecke, Anwendungen und Ausführungsformen auf mehrere Apparaturen verteilt sein, etwa wenn ein besonderer Schutz - z.B. gegen Wasser, aggressive Flüssigkeiten, Staub, Sprengstoffe, usw. - oder ein besonderer Effekt - wie beispielsweise ein besonders geringes Gewicht für ein Fluggerät oder einen Roboter - erzielt werden soll.

Weitere Merkmale der Erfindung ergeben sich aus der nachfolgenden detaillierten Beschreibung von Ausführungsbeispielen der vorliegenden Erfindung in Verbindung mit den Zeichnungen. Es zeigt:

**Fig. 1:** eine Übersicht über Verfahrensschritte dervorliegenden Erfindung;

**Fig. 2a:** eine schematische Darstellung des beweglichen Objekts und der Referenz-Marker, in einem 2-dimensionalen Raum;

**Fig. 2b:** eine schematische Darstellung der virtuellen Repräsentation des 2-dimensionalen Raums und des beweglichen Objekts und der Positionen der Referenz-Marker gemäß Fig. 1, in einem 2-dimensionalen kartesischen Koordinatensystem mit korrespondierenden Referenz-Punkten;

**Fig. 3:** eine schematische Verdeutlichung der Nicht-Identifizierbarkeit der Positionen von Referenz-Punkten bzw. korrespondierenden Referenz-Markern in einem Überlappungsbereich von Winkel-Informationen bzw. Richtungs-Informationen;

**Fig. 4a:** eine schematische Darstellung des Bewegens des beweglichen Objekts und der Durchführung von Verfahrensschritten enthaltend das Ermitteln von Richtungs-Informationen, in dem 2-Dimensionalen Raum gem. Fig. 1;

**Fig. 4b:** eine schematische Darstellung des Ermittelns von Richtungs-Informationen, in der zum 2-dimensionalen Raum gem. Fig. 4a korrespondierenden virtuellen Repräsentation;

**Fig. 5:** eine schematische Darstellung der Bestimmung der genäherten zweiten Position bei Identifikation nur eines Referenz-Markers (n=1);

**Fig. 6:** eine schematische Darstellung eines Schritts bei der Bestimmung der genäherten zweiten Position bei Identifikation von zwei Referenz-Markern (n=2);

**Fig. 7:** eine schematische Darstellung einer Weiterbildung der Bestimmung der genäherten zweiten Position gem. Fig. 6;

**Fig. 8:** eine grob schematische Darstellung der Bestimmung der genäherten zweiten Position bei Identifikation von drei Referenz-Markern (n=3).

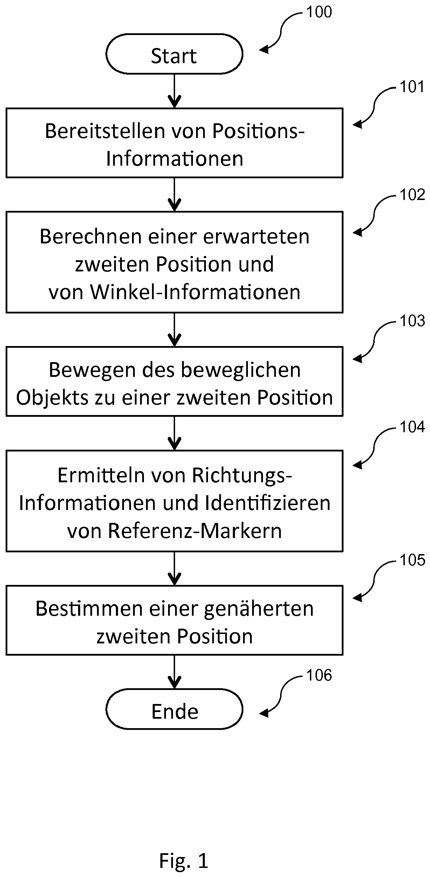

**Fig. 1** zeigt eine Übersicht über die grundlegenden Schritte des erfindungsgemäßen Verfahrens: Zu Beginn des Verfahrens 100 werden Positions-Informationen von einem oder mehreren Referenz-Punkten in einer virtuellen Repräsentation dieses Raums bereitgestellt 101. Es gibt eine Entsprechung zwischen den Positionen realer Referenz- Marker in dem Raum, den die Karte darstellt, und denen der Referenz-Punkte in der virtuellen Repräsentation. Die virtuelle Repräsentation ist in einem Speicher, auf den das genannte bewegliche Objekt während der Ausführung des erfindungsgemäßen Verfahrens mittelbar oder unmittelbar Zugriff hat, gespeichert.

Im nächsten Schritt findet das Berechnen einer erwarteten zweiten Position und von Winkel-Informationen 102 statt. Diese Berechnung erfolgt auf der Basis einer vorbekannten aktuellen ersten Position des Objekts in der virtuellen Repräsentation. Diese erste Position kann entweder direkt als Startposition in die virtuelle Repräsentation eingegeben worden sein, oder sie wurde aus einer vorhergegangenen Position des beweglichen Objekts mittels des erfindungsgemäßen Verfahrens berechnet, so dass für diesen Fall die genäherte zweite Position eines vorhergehenden Ablaufs des erfindungsgemäßen Verfahrens die erste Position des nachfolgenden Ablaufs darstellt.

Das bewegliche Objekt bewegt sich mit einer bestimmten Geschwindigkeit mittels einer oder mehrerer Antriebseinheiten in dem Raum. Die Ausgestaltung dieser Antriebseinheiten hängt dabei stark von der Ausführungsform des beweglichen Objekts ab: Bei einem Flugobjekt können typischerweise Rotoren, Propeller oder Düsen zum Einsatz kommen, während bei Fahrzeugen, wie zum Beispiel einem Rasenmäher, beispielsweise mittels eines Motors angetriebene Ketten oder Räder zum Einsatz kommen können. Die beschriebenen Antriebseinheiten können dabei auf eine solche Weise angesteuert werden, dass das bewegliche Objekt einer vorgegebenen Bewegungsbahn folgt, z.B. einer Geraden oder einer Kurve mit vorgegebenen Radius. Dazu besitzt das bewegliche Objekt wenigstens eine Steuerung (die bevorzugt in einer Datenverarbeitungseinrichtung integriert ist), mittels derer verschiedene Parameter der Antriebseinheiten -z.B. die aktuelle Geschwindigkeit, die aktuelle Richtung, oder aber unterschiedliche Geschwindigkeiten auf einzelnen Ketten oder Rädern - angesteuert werden können.

Aus den Steuerungs-Parametern für die Antriebseinheit(en) kann das bewegliche Objekt errechnen, an welcher erwarteten zweiten Position (in der virtuellen Repräsentation) es sich nach einer gewissen Zeitspanne - z.B. nach einer Sekunde - befinden wird. Außerdem kann auch die Orientierung des Objekts, bezogen auf die eine vorgegebene Bezugs-Achse des Objekts, aus diesen Angaben errechnet werden.

Bei der vorliegenden Erfindung werden bevorzugt zusätzlich noch die Unsicherheiten jeder Größe und in jeder Dimension berechnet, beispielsweise die räumliche Unsicherheit der erwarteten zweiten Position. In diese Fehlerberechnung gehen mehrere Parameter ein, wie Geschwindigkeitsunsicherheiten wegen Parameter-Streuungen der Antriebe, die Beschaffenheit des Untergrunds, Drift und Traktionsverluste, und dergleichen. Ferner geht die Winkelauflösung des Detektionssystems und/oder des Orientierungssensors in die Fehlerberechnung mit ein.

Nach der Berechnung der erwarteten zweiten Position innerhalb der virtuellen Repräsentation werden die in der virtuellen Repräsentation vorgesehenen Referenz-Punkte verwendet, um, von der erwarteten zweiten Position aus, für jeden dieser Referenz-Punkte zu berechnen, unter welchem Winkel er dem Objekt - bezogen auf eine vorgegebene Bezugs-Achse des beweglichen Objekts - innerhalb der virtuellen Repräsentation erscheint, d.h. welche Winkel-Informationen von dem mit dem beweglichen Objekt verknüpften Detektionssystem, für jeden einzelnen Referenz-Marker im Raum, an einer zur erwarteten zweiten Position korrespondierenden Position im Raum bei einem Detektionsvorgang geliefert werden müssten.

In einem nächsten Schritt wird das bewegliche Objekt auf der Grundlage der vorgegebenen und zuvor im Rahmen der Berechnungen bestimmten Antriebsparameter in dem Raum zu einer zweiten Position bewegt 103. Dazu werden die genannten Antriebseinheiten des beweglichen Objekts mit den geeigneten Parametern angesteuert und damit eine vorgegebene Bewegungsbahn zurückgelegt. Nach einer gewissen Zeitspanne befindet es sich an dieser zweiten Position im Raum.

In einer alternativen Ausführungsform ist überdies möglich, dass die Berechnung der erwarteten zweiten Position und der Winkel-Informationen im wesentlichen in Echtzeit erfolgt, während das bewegliche Objekt durch die Steuerungseinheit mittels gewisser Antriebsparameter angesteuert wird und die dadurch definierte (theoretische) Bewegungsbahn zurück legt. Der Schritt des Bewegens des beweglichen Objekts zu der zweiten Position erfolgt in diesem Fall also im wesentlichen gleichzeitig mit der Berechnung einer erwarteten zweiten Position und dazu gehörigen Winkelinformationen (wobei diese Berechnungen im Laufe der Bewegung dann kontinuierlich aktualisiert würde) und nicht chronologisch aufeinanderfolgend.

Die erwartete zweite Position wird Häufig (aus den oben genannten Gründen) von der tatsächlichen zweiten Position des beweglichen Objekts im Raum abweichen; daher wird die zweite Position mittels der Referenz-Marker zu einer genäherten zweiten Position korrigiert. Dazu findet an der zweiten Position im Raum, mittels des Detektionssystems, ein Ermitteln von Richtungs-Informationen Referenz-Markern 104 statt. Die Richtungs-Informationen sind dabei vorzugsweise bezogen auf die vorgegebene Bezugs-Achse des beweglichen Objekts. Das Ermitteln (der Scan-Vorgang) wird mittels wenigstens eines Sensors und bevorzugt mittels eines Detektionssystems, der bzw. das mit dem beweglichen Objekt verknüpft ist, durchgeführt.

Nach dem Scan-Vorgang werden als weiterer Berechnungsschritt diejenigen Referenz-Marker identifiziert, aufgrund der bestimmten Winkel-Informationen, für welche die ermittelten Richtungs-Informationen eine eindeutige Unterscheidbarkeit der jeweiligen Referenz-Marker erlauben. Dafür werden von den detektierten Signalen diejenigen ausgewählt, die - nach den oben erläuterten Berechnungen, auf der Basis der Karte der Referenz-Punkte in der virtuellen Repräsentation - auf Grund ihrer Winkel-Informationen eindeutig unterscheidbar sind, auch unter Berücksichtigung gewisser Unsicherheiten der Werte für die Richtungs-Informationen.

Wenn also beispielsweise zwei oder mehr Referenz-Punkte in der virtuellen Repräsentation, von der zweiten Position des beweglichen Objekts aus gesehen, im Rahme der Unsicherheiten im wesentlichen auf einer Line liegen, dann sind die entsprechenden Referenz-Marker im Raum nicht eindeutig identifizierbar. Daher werden Signale aus dieser Richtung (Richtungs-Informationen) für die Positionsbestimmung nicht verwendet.

In einer weiteren Ausführungsform der Erfindung kann wenigstens ein Orientierungssensor verwendet werden, um die Orientierungs-Informationen des beweglichen Objekts zu ermitteln. Bei dem wenigstens einem Orientierungssensor handelt es sich bevorzugt um einen Kompass, besonders bevorzugt um einen magnetischen Kompass. In einer anderen Ausführungsform kann der Orientierungssensor aber auch als Kreiselkompass, Gyroskop, Faserkreisel, Laserkreisel (Ringlaser) oder dergleichen ausgestaltet sein.

Mit diesen gemessenen Informationen und den vorhandenen Positions-Informationen der Referenz-Marker im Speicher wird eine genäherte zweite Position 105 bestimmt. Dazu werden die ermittelten Richtungs-Informationen der identifizierten Referenz-Marker und der erwarteten zweiten Position des Objekts, und gegebenenfalls die Orientierungsinformationen, verwendet, um eine genäherte zweite Position und gegebenenfalls Orientierung des beweglichen Objekts innerhalb der virtuellen Repräsentation zu bestimmen. Die erwartete zweite Position (und Orientierung) des beweglichen Objekts in der virtuellen Repräsentation wird also mittels der ermittelten Richtungs-Informationen (und ggf. Orientierungs-Informationen) der identifizierten Referenz-Marker im Raum korrigiert, so dass damit eine verbesserte, genäherte zweite Position des beweglichen Objekts in der virtuellen Repräsentation bestimmt wird. Je nachdem wie viele Referenz-Marker bei dem Scan-Vorgang eindeutig identifiziert werden konnten, werden unterschiedliche Methoden zur Bestimmung der aktuellen Position des beweglichen Objekts verwendet.

Mit diesem Schritt kann das Verfahren beendet werden 106. Das Verfahren kann aber auch, wie vorstehend beschrieben, in einer weiteren Ausführungsform in vorbestimmten zeitlichen oder räumlichen Abständen zyklisch wiederholt werden.

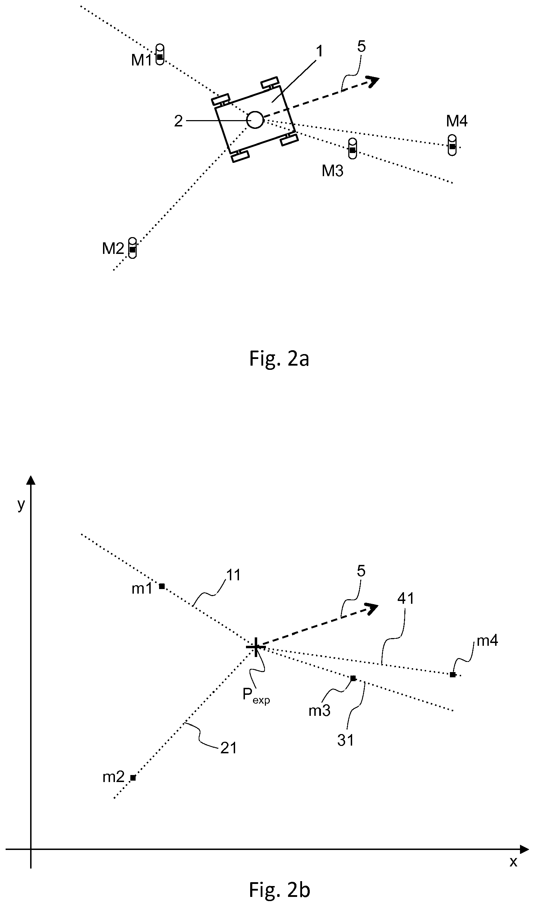

**Fig. 2a** zeigt in einer schematischen Darstellung eine erfindungsgemäße Ausführungsform des beweglichen Objekts 1 und der Referenz-Marker M1 bis M4, in einem 2-dimensionalen Raum. Das bewegliche Objekt 1 wird hier als ein Fahrzeug mit vier Rädern skizziert, das sich entlang einer Bewegungsachse 5 fortbewegt. Auf dem Fahrzeug 1 ist ein Detektionssystem mit einem oder mehreren Sensoren 2 angebracht. Das Detektionssystem 2 kann auch an einem anderen Objekt angebracht sein, das mit dem Fahrzeug 1 verbunden ist (beispielsweise einem Anhänger). Die im Zusammenhang mit der Erfindung eingesetzten Detektionssysteme sind auf die verwendeten Strahlungsarten, Wellenlängen und Reflektoren abgestimmt. So weist eine bevorzugte Ausführungsform des Detektionssystems als Sender mindestens einen Laser auf, der an einem in kontinuierliche Rotation versetzten Detektionskopf angeordnet ist, wobei der Detektionskopf mit einer Winkelmesseinrichtung direkt oder mittelbar verbunden ist, so dass die Stellung des Detektionskopfes zu jedem Zeitpunkt bestimmbar ist. Weiterhin sind schematisch Referenz-Marker M1 bis M4 dargestellt. In einer Ausführungsform weisen die Referenz-Marker Retroreflektoren auf, die die eingestrahlte Laserstrahlung in im wesentlichen die Richtung zurück reflektieren, aus der sie eingetroffen ist.

Dieser Konstellation im Raum entspricht eine Darstellung in der virtuellen Repräsentation, wie sie in **Fig. 2b** skizziert ist. Dabei befindet sich das bewegliche Objekt in dieser Figur bereits an der erwarteten Position $P_{exp}$; die Orientierung des beweglichen Objekts ist durch die Bewegungsachse 5 bestimmt. Die Positionen der Referenz-Punkte m1 bis m4 (in der virtuellen Repräsentation) der korrespondierenden Referenz-Marker M1 bis M4 im Raum sind als Positionen in einem 2-dimensionalen kartesischen Koordinatensystem als Koordinaten gespeichert, bevorzugt mit entsprechenden Unsicherheiten für die Positionierung. Die Geraden 11, 21, 31, 41 zeigen die Richtungen an, in denen sich die Referenz-Punkte m1 bis m4, bezogen auf das Detektionssystem 2, befinden; daher gehen die Geraden 11, 21, 31, 41 durch das Detektionssystem 2 und die Koordinaten der jeweiligen Positionen der Referenz-Punkte m1 bis m4.

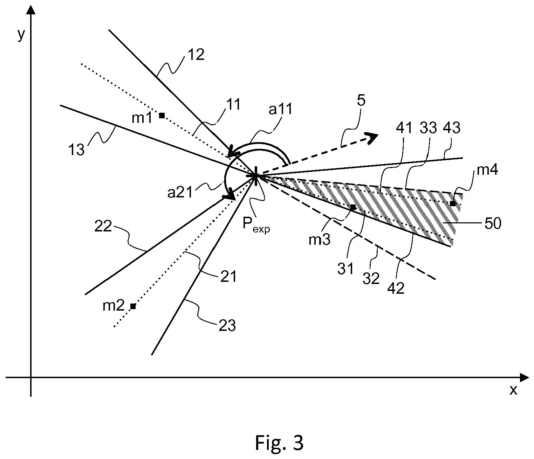

**Fig. 3** zeigt an einem Beispiel, welche Referenz-Punkte an der erwarteten zweiten Position $P_{exp}$ unter Berücksichtigung von Winkelunsicherheiten der Detektion detektierbar sind. Das bewegliche Objekt 1 befindet sich an der erwarteten Position $P_{exp}$ und dessen Orientierung ist durch die Bewegungsachse 5 bestimmt. Fürjeden der Referenz-Marker M1 bis M4 im Raum wurden aus der erwarteten Position $P_{exp}$ und den Positionen der Referenz-Punkte m1 bis m4 in dervirtuellen Repräsentation die Winkel a11, a21 usw. - in Richtung der Geraden 11, 21, 31, 41, bezogen auf die Bewegungsachse 5 - berechnet, unter denen sie beim Scan-Vorgang (Detektionsvorgang) erscheinen sollten. Aus Gründen der Übersichtlichkeit wurden nur die Winkel a11 und a21 dargestellt. Die zur Berechnung von a11, a21 usw. herangezogenen Winkelauflösungen des Detektionssystems 2, die Orientierung der Bewegungsachse 5 und die Positionen der Referenz-Punkte m1 bis m4 sind mit einer Unsicherheit beaufschlagt. Daher werden die Signale der zugehörigen Referenz-Marker M1 bis M4 nicht genau aus den jeweiligen Richtungen der Geraden 11, 21, 31, 41 erwartet, sondern vielmehr aus einem Bereich jeweils zwischen einer zugehörigen rechten Fehlergrenze 12, 22, 32, 42 und einer entsprechenden linken Fehlergrenze 13, 23, 33, 43 dieser Geraden.

Hierauf basierend werden für jede der Positionen der Referenz-Punkte m1 bis m4 Bereiche berechnet, innerhalb derer sie unter Berücksichtigung der Unsicherheiten detektiert werden können. So kann die Position des Referenz-Punkts m1 irgendwo zwischen den Geraden 12 und 13 detektiert werden; analog kann m2 zwischen 22 und 23, m3 zwischen 32 und 33 (die Geraden 32 und 33 sind gestrichelt dargestellt) und m4 zwischen 42 und 43 detektiert werden. Dabei wird deutlich, dass sich die Unsicherheiten der Positionen m1 bis m4 überlappen können: Wenn ein Signal in einem Überlappungsbereich 50, zwischen den Geraden 42 und 33, detektiert wird, dann könnte es entweder von dem Referenz-Marker M3, der Referenz-Punkt m3 entspricht, oder von dem Referenz-Marker M4, der Referenz-Punkt m4 entspricht, reflektiert worden sein; ein solches Signal kann also innerhalb des Überlappungsbereichs 50 nicht eindeutig dem Referenz-Marker M3 oder M4 zugeordnet werden. In dem dargestellten Beispiel sind also nur die Referenz-Marker M1 und M2 identifizierbar, nicht aber die Referenz-Marker M3 und M4, deren entsprechende Referenz-Punkte in der virtuellen Repräsentation sich innerhalb des Überlappungsbereichs 50 befinden.

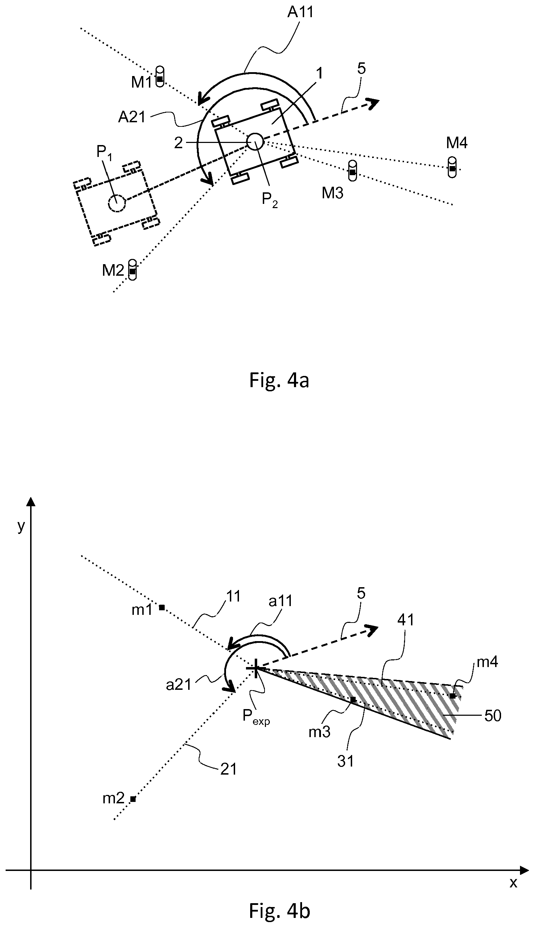

**Fig. 4a** zeigt schematisch, wie das bewegliche Objekt 1 von einer ersten Position $P_1$ im Raum zur einer zweiten Position $P_2$ bewegt wurde, an der der Detektionsvorgang durchgeführt wird; an der Stelle $P_2$ weist das bewegliche Objekt 1 die Orientierung 5 auf. An der Stelle $P_2$ scannt das Detektionssystem 2 die Referenz-Marker M1 bis M4, wobei der Referenz-Marker M1 in der Richtung A11 und M2 in der RichtungA21 (Richtung A11 und A21 sind bezogen auf die Orientierung 5) detektiert wird. Aus Gründen der Übersichtlichkeit wurden nur die Winkel A11 und A21 dargestellt.

**Fig. 4b** zeigt schematisch, welche der gescannten Signale für die weiteren Verfahrensschritte verwendet werden: Die Signale mit der Winkel-Information a11 - die dem Richtungs-Information A11 beim Scan-Vorgang entspricht - können eindeutig der Position m1 zugeordnet werden, Signale mit der Winkel-Information a21 - entsprechend der Richtungs-Information A21 - der Position m2. Signale, die innerhalb des Überlappungsbereichs 50 reflektiert werden, können jedoch nicht eindeutig zugeordnet werden; die Referenz-Marker M3 und M4, entsprechend den Referenz-Punkten m3 und m4, sind also nicht identifizierbar. Für die weiteren Verfahrensschritte können also nur die Referenz-Marker M1 und M2 verwendet werden, die somit aus der Menge aller Referenz-Marker identifiziert werden.

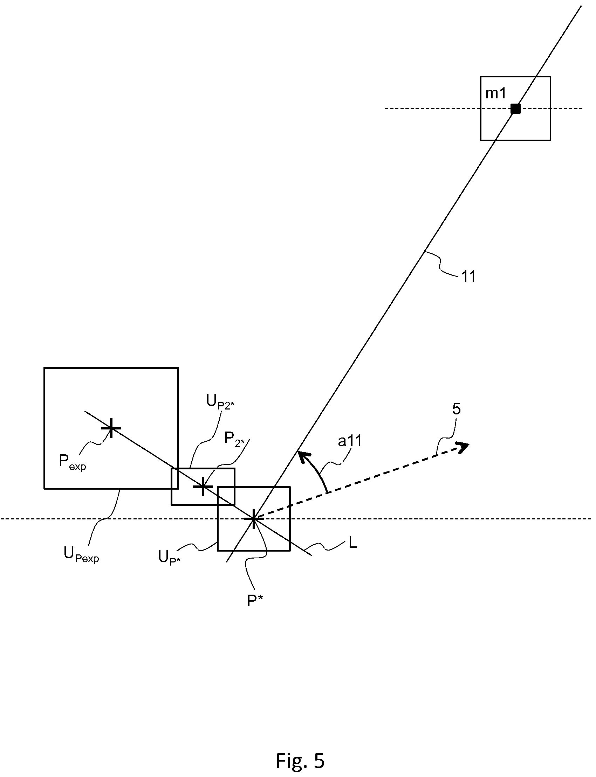

**Fig. 5** zeigt die weitere Vorgehensweise, für Fälle bei denen genau ein Signal (n=1) identifiziert werden kann. Dabei wurde die erwartete zweite Position zu $P_{exp}$ mit der Unsicherheit $U_{Pexp}$ mittels des oben erläuterten Verfahrens berechnet. Das Detektionssystemdetektiert an der Position an der sich das bewegliche Objekt befindet und die von $P_{exp}$ mehr oder minder stark abweichen kann, unter dem Winkel a11 (bezogen auf die Orientierung 5) ein Signal, das dem Referenz-Punkt m1 mit der Unsicherheit $U_{m1}$ zugeordnet werden kann. Der Winkel a11 entspricht dabei der ermittelten Richtungs-Information. Durch die Detektion ist also bekannt, dass sich m1 irgendwo auf der Geraden 11 befindet.

Für die Berechnung der genäherten zweiten Position $P_{2*}$ wird jetzt das Lot L von $P_{exp}$ auf die Gerade 11 gefällt und der Schnittpunkt P* der beiden Geraden 11 und L berechnet. Um die genäherte zweite Position $P_{2*}$ zu ermitteln, wird hiernach das gewichtete Mittel von P* und $P_{exp}$ berechnet. Dabei ergibt sich die Gewichtung, wie auch in **Fig. 5** gezeigt, aus dem Verhältnis der Unsicherheiten $U_{Pexp}$ und $U_{P*}$; da die Unsicherheit $U_{P*}$ von P* in diesem Beispiel kleiner ist als die Unsicherheit $U_{Pexp}$ von $P_{exp}$, liegt die genäherte zweite Position $P_{2*}$ näher an $U_{P*}$ als an $U_{Pexp}$. Dabei verwendet die Berechnung der Unsicherheit $U_{P2*}$ für die Position $P_{2*}$ eine Fehlerrechnung, insbesondere unter Verwendung des Gauß'schen Fehlerfortpflanzungstheorems.

Die gewichtete Entfernung zwischen $P_{exp}$ und $P_{2*}$, also die Entfernung zwischen $P_{exp}$ und der genäherten zweiten Position $P_{2*}$, errechnet sich zu:

$$\text{Distanz}(P_{exp}; P_{2*}) = \text{Distanz}(P_{exp}; P*) * \left( (U_{Pexp})^2 / ((U_{Pexp})^2 + (U_{P*})^2) \right) \qquad \text{(Gl. 1)}$$

Die Unsicherheit $U_{P2*}$ für die Position $P_{2*}$ errechnet sich zu:

$$U_{P2*} = (U_{Pexp} * U_{P*}) / \text{Quadratwurzel}\left( (U_{Pexp})^2 + (U_{P*})^2 \right) \qquad \text{(Gl. 2)}$$

Im gezeigten Beispiel weisen die Positionen $P_{exp}$ (0; 0) und P* (35; -22) die Unsicherheiten $U_{Pexp}$ (33; 29) und $U_{P*}$ (17; 15) auf.

Damit errechnet sich bei diesem Beispiel

$$\text{Distanz}(Pexp; P2*)|_x = (35) * (33^2 / (33^2 + 17^2)) = 27{,}7$$

$$\text{Distanz}(Pexp; P2*)|_y = (-22) * ((29^2 / (29^2 + 15^2)) = -17{,}4$$

$$UP2*|_x = (33 * 17) / \text{Quadratwurzel}((33^2 + 17^2)) = 15{,}1$$

$$UP2*|_y = (29 * 15) / \text{Quadratwurzel}((29^2 + 15^2)) = 13{,}3$$

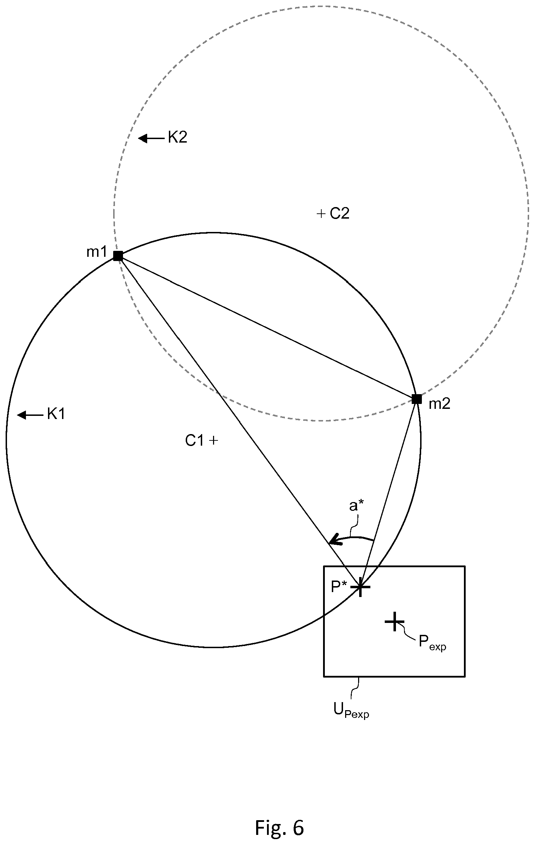

**Fig. 6** erläutert den Fall, bei dem 2 Signale (n=2) für die Positionsbestimmung zur Verfügung stehen. Dabei wurde wieder die erwartete zweite Position zu $P_{exp}$ mit der Unsicherheit $U_{Pexp}$ mittels des oben erläuterten Verfahrens berechnet. Das bewegliche Objekt 1 hat beim Detektionsvorgang (Scan) die Referenz-Punkte m1 und m2, entsprechend den Referenz-Markern M1 und M2, detektiert; m1 und m2 bilden mit der Position des Detektionssystems ein Dreieckmit einem Innenwinkel Winkel a*. Hierauf basierend lässt sich ein Fasskreisbogen durch m1 und m2 konstruieren, der dadurch definiert ist, dass von jedem Punkt auf diesem Fasskreisbogen die beiden Referenz-Punkte m1 und m2 unter dem gleichen Winkel a* gesehen werden.

Es ist zu beachten, dass immer zwei mögliche Fasskreisbögen K1 und K2, mit den jeweiligen Mittelpunkten C1 und C2, für zwei Referenz-Punkte Punkte m1 und m2 und den Winkel a* existieren. Für das weitere Vorgehen wird derjenige Fasskreisbogen (K1 oder K2) ausgewählt, dessen Mittelpunkt (C1 oder C2) sich näher an der erwarteten zweiten Position $P_{exp}$ befindet; im gezeigten Beispiel ist der Mittelpunkt C1 von K1 näher an $P_{exp}$, und daher wird Fasskreisbogen K1 ausgewählt.

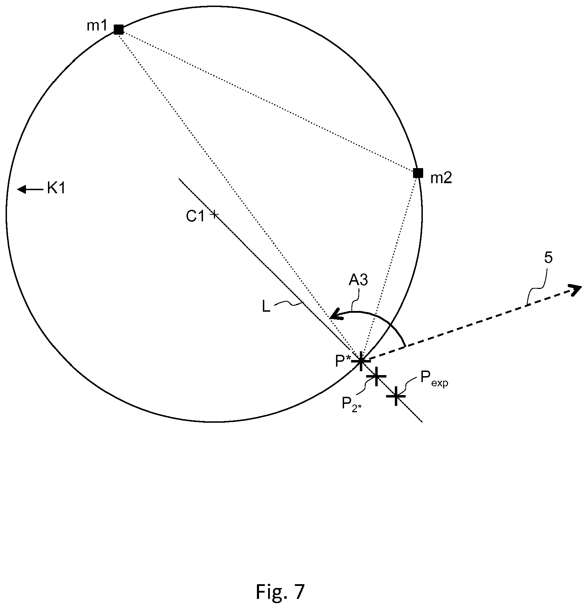

Im folgenden Schritt wird, wie in **Fig. 7** gezeigt, das Lot L von der erwarteten zweiten Position auf den Fasskreisbogen K1 gefällt und der Schnittpunkt P* von K1 und L berechnet. Um die genäherte zweite Position $P_{2*}$ zu ermitteln, wird wiederum, wie zuvor beschrieben, das gewichtete Mittel von P* und $P_{exp}$ berechnet. Dabei ergibt sich, analog zum Vorgehen bei **Fig. 5**, die Gewichtung aus dem Verhältnis der Unsicherheiten $U_{Pexp}$ und $U_{P*}$ ($U_{Pexp}$ und $U_{P*}$ sind in **Fig. 7** nicht gezeigt). Anschließend wird die Unsicherheit $U_{P2*}$ für die Position $P_{2*}$ durch eine Fehlerrechnung, insbesondere mittels Gaußscher Fehlerfortpflanzung, berechnet ($U_{P2*}$ ist in **Fig. 7** nicht gezeigt).

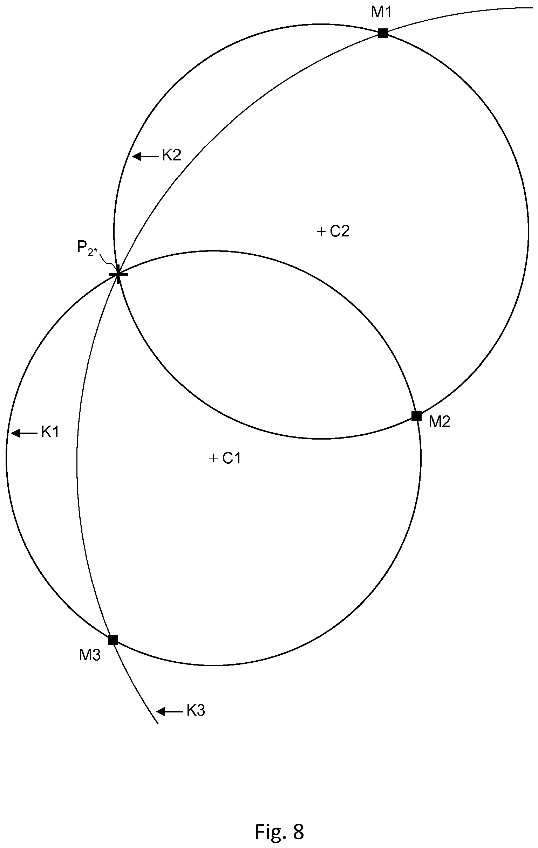

**Fig. 8** zeigt einen Fall, bei dem 3 Referenz-Punkte (n=3) identifiziert werden konnten. In diesem Fall werden für jeweils zwei Referenz-Punkte ml/m2, m2/m3 und m3/ml Fasskreisbögen K2, Kl und K3 nach dem in Bezug auf die **Figuren 6 und 7** beschriebenen Verfahren gebildet und hiernach ebenfalls nach dem zuvor beschriebenen Verfahren die Schnittpunkte und folgend die genäherten zweiten Positionen als gewichtetes Mittel für jeden einzelnen Fasskreisbogen ermittelt. Aus diesen drei daraus resultierenden genäherten Positionen ergibt sich durch Schwerpunktbildung die genäherte zweite Position $P_{2*}$des beweglichen Objekts 1.

Werden 4 oder mehr Positionen (n>3) identifiziert, dann können zur Effizienzsteigerung der Berechnung entweder Dreiergruppen gebildet, bei denen jeweils wie für **Fig. 8** bei der Berechnung der Position $P_{2*}$ vorgegangen wird, oder es werden für alle Tupel von Referenz-Markern nach den vorstehend beschriebenen Verfahren die genäherten zweiten Positionen ermittelt und hieraus wiederum die 3 genäherten zweiten Positionen mit den geringsten Unsicherheiten ausgewählt auf der Basis derer dann durch Schwerpunktbildung die genäherte zweite Position $P_{2*}$des beweglichen Objekts 1 ermittelt wird.

Liste der Bezugzeichen:

| | |
|---|---|
| 1 | bewegliches Objekt |
| 2 | Detektionssystem, Sensor |
| 3 | Orientierungssensor |
| 5 | Bewegungs-Achse, Orientierung |
| 11, 12, 13 | Gerade |
| 21,22,23 | Gerade |
| 31,32,33 | Gerade |
| 41,42,43 | Gerade |
| 50 | Überlappungsbereich |
| 100 | Start des Verfahrens |
| 101 | Schritt 1 des Verfahrens |
| 102 | Schritt 2 des Verfahrens |
| 103 | Schritt 3 des Verfahrens |
| 104 | Schritt 4 des Verfahrens |
| 105 | Schritt 5 des Verfahrens |
| 106 | Ende des Verfahrens |
| A11, A21 | Richtung |
| a11, a21 | Winkel, Winkel-Information |
| a* | Winkel-Information an Position P* |
| C1, C2 | Mittelpunkt von K1 bzw. K2 |
| K1, K2, K3 | Fasskreisbogen |
| L | Lot |
| M1, M2, M3, M4 | Referenz-Marker |
| m1, m2, m3, m4 | Position von M1, M2, M3, M4 |

| | |
|---|---|
| $P_1$ | erste Position |
| $P_2$ | zweite Position |
| $P^*$ | Schnittpunkt |
| $P_{2*}$ | genäherte zweite Position |
| $P_{exp}$ | erwartete zweite Position |
| $U_{m1}$ | Unsicherheiten (von m1) |
| $U_{P1}$ | Unsicherheiten (von $P_1$) |
| $U_{P2*}$ | Unsicherheiten (von $P_{2*}$) |
| $U_{Pexp}$ | Unsicherheiten (von $P_{exp}$) |

**Patentansprüche**

1. Verfahren zur Bestimmung einer Position eines beweglichen Objekts innerhalb einer virtuellen Repräsentation eines Raumes, aufweisend die Schritte:

   a. Bereitstellen einer virtuellen Repräsentation eines Raums mit Informationen über die Position wenigstens eines Referenz-Punkts (m1, m2, m3, m4), die der Position eines korrespondierenden Referenz-Markers (M1, M2, M3, M4) in dem Raum im wesentlichen entspricht: charakterisiert durch die folgenden, weiteren Schritte:

   b. Berechnen einer erwarteten zweiten Position ($P_{exp}$) des Objekts (1) innerhalb der virtuellen Repräsentation basierend auf einer aktuellen ersten Position ($P_1$) und auf einem oder mehreren Antriebsparametern einer oder mehrerer Antriebseinheiten des beweglichen Objekts;

   c. Berechnen von erwarteten Winkel-Informationen (a11, a12) der Position wenigstens einen Referenz-Punkts (m1, m2, m3, m4) bezogen auf eine Achse (5) des Objekts (1) an der erwarteten zweiten Position ($P_{exp}$) innerhalb der virtuellen Repräsentation;

   d. Bewegen des beweglichen Objekts (1) in dem Raum zu einer zweiten Position ($P_2$), welche mit der erwarteten zweiten Position ($P_{exp}$) korrespondiert, basierend auf dem oder den Antriebsparametern, insbesondere der Geschwindigkeit und der Richtung, der einen oder mehreren Antriebseinheiten des beweglichen Objekts (1);

   e. an der zweiten Position, Ermitteln von Richtungs-Informationen (A11, A21) des wenigstens einen Referenz-Markers (M1, M2, M3, M4) in dem Raum bezogen auf die Achse (5) des Objekts (1), durch wenigstens einen Sensor (2), der mit dem beweglichen Objekt (1), insbesondere über eine Kommunikationsverbindung, verknüpft ist;

   f. Identifizieren von n Referenz-Markern (M1, M2) aufgrund der berechneten erwarteten Winkel-Informationen, für welche die ermittelten Richtungs-Informationen (A11, A21) eine eindeutige Unterscheidbarkeit der jeweiligen Referenz-Marker (M1, M2), nämlich eine eindeutige Zuordnung der Richtungs-Informationen (A11, A21) zu jeweils einem Referenz-Marker (M1, M2, M3, M4), erlauben;

   g. Verwenden der ermittelten Richtungs-Informationen (A11, A21) des mindestens einen identifizierten Referenz-Markers (M1, M2) und der erwarteten zweiten Position ($P_{exp}$) des Objekts (1), um eine genäherte zweite Position ($P_{2*}$) des beweglichen Objekts (1) innerhalb der virtuellen Repräsentation zu bestimmen, wobei die Schritte a. bis g. in vorbestimmten zeitlichen oder räumlichen Abständen wiederholt werden.

2. Verfahren nach Anspruch 1, weiterhin aufweisend die Schritte:

   b+. Berechnen einer erwarteten zweiten Orientierung der Achse (5) des Objekts (1) innerhalb der virtuellen Repräsentation, basierend auf einer aktuellen ersten Orientierung der Achse (5) des Objekts (1) und auf dem einen oder der mehreren Antriebsparametern der einen oder mehreren Antriebseinheiten des beweglichen Objekts; und

   g+. Verwenden der ermittelten Richtungs-Informationen (A11, A21) des mindestens einen identifizierten Referenz-Markers (M1, M2) und der erwarteten zweiten Orientierung der Achse (5) des Objekts (1), um eine genäherte zweite Orientierung derAchse (5) des beweglichen Objekts (1) innerhalb der virtuellen Repräsentation zu bestimmen.

3. Verfahren nach Anspruch 1, weiterhin aufweisend die Schritte:

   b+. Berechnen einer erwarteten zweiten Orientierung der Achse (5) des Objekts (1) innerhalb der virtuellen Repräsentation, basierend auf einer aktuellen ersten Orientierung der Achse (5) des Objekts (1) und auf dem einen oder der mehreren Antriebsparametern der einen oder mehreren Antriebseinheiten des beweglichen Objekts;

e+. an der zweiten Position ($P_2$), ermitteln von Orientierungs-Informationen des Objekts (1) mittels wenigstens eines Orientierungssensors (3), der mit dem beweglichen Objekt verknüpft ist; und

g+. Verwenden der ermittelten Orientierungs-Informationen und der erwarteten zweiten Orientierung des Objekts (1), um eine genäherte zweite Orientierung des beweglichen Objekts (1) innerhalb dervirtuelten Repräsentation zu bestimmen.

4. Verfahren nach einem der vorhergehenden Ansprüche, wobei für den Fall dass

   a. n = 1, eine Mehrzahl von möglichen Positionen innerhalb der virtuellen Repräsentation bestimmt wird, von denen aus der identifizierte Referenz-Marker (M1) unter der ermittelten Richtungs-Informationen erscheint, wobei die Mehrzahl der möglichen Positionen auf einer Geraden (g) liegt;
   b. n = 2, eine Mehrzahl von möglichen Positionen innerhalb der virtuellen Repräsentation bestimmt wird, von denen aus die identifizierten Referenz-Marker unter deren ermittelten Richtungs-Informationen erscheinen, wobei die Mehrzahl der möglichen Positionen auf einem Kreisbogen (K1) liegt; und
   c. n > 2, eine Mehrzahl von möglichen Positionen innerhalb der virtuellen Repräsentation bestimmt wird, von denen aus jeweils zwei der identifizierten Referenz-Marker unter deren ermittelten Richtungs-Informationen erscheinen, wobei die Mehrzahl der möglichen Positionen auf einer Mehrzahl von Kreisbögen (K1, K2, K3) liegen.

5. Verfahren nach Anspruch 4, wobei die Bestimmung der genäherten zweiten Position ($P_{2*}$) des beweglichen Objekts (1) Innerhalb der virtuellen Repräsentation mit Hilfe des Lots (L) von der erwarteten zweiten Position ($P_{exp}$) des Objekts (1) auf die Mehrzahl von möglichen Positionen zur Ermittlung wenigstens eines Schnittpunktes (P*) erfolgt,

6. Verfahren nach Anspruch 5, wobei für den Fall der Ermittlung nur eines Schnittpunkts (P*) das Mittel der erwarteten zweiten Position ($P_{exp}$) und des Schnittpunkts (P*) die genäherte zweite Position ($P_{2*}$) definiert, und für den Fall der Ermittlung mehrerer Schnittpunkte (P*) der Schwerpunkt aller Mittel der erwarteten zweiten Position ($P_{exp}$) und jeweils eines Schnittpunkts (P*) die genäherte zweite Position ($P_2$) definiert.

7. Verfahren nach einem der vorherigen Ansprüche, wobei die Informationen über die Position von Referenz-Markern, die aktuelle erste Position ($P_1$), der oder die Antriebsparametern der einen oder mehreren Antriebseinheiten, die erwartete zweite Position ($P_{exp}$), die erwarteten Winkel-Informationen (a11, a21), die Richtungs-Informationen (A11, A21), die genäherte zweite Position ($P_2$), die aktuelle erste Orientierung, die erwartete zweite Orientierung, die Orientierungs-Informationen, die genäherte zweite Orientierung, die Mehrzahl von möglichen Positionen, der wenigstens eine Schnittpunkt (P*), das wenigstens eine Mittel und/oder der Schwerpunkt durch mit Unsicherheiten ($U_{m1}$, $U_{P1}$, $U_{Pexp}$, $U_{P-}$, $U_{P2-}$) beaufschlagte Werte definiert sind, und wobei diese Unsicherheiten in den Verfahrensschritten b. bis g, und gegebenenfalls b+., e+, und g+. berücksichtigt und vorzugsweise fortgepflanzt werden, und insbesondere mittels Gaußscher Fehlerfortpflanzung fortgepflanzt werden.

8. Verfahren nach einem der vorhergehenden Ansprüche, wobei die ermittelten Richtungs-Informationen (A11, A21) eine eindeutige Unterscheidbarkeit von Referenz-Markern (M3, M4) nicht erlauben, wenn die ermittelten Richtungs-Informationen (A11, A21) zu mehr als einem Referenz-Marker gehören könnten (50), und insbesondere wenn dies ein Ergebnis der Unsicherheiten und/oder deren Fortpflanzung ist.

9. Verfahren nach einem der vorherigen Ansprüche, wobei, für den Fall dass n = 0, die Schritte der b. bis g. und gegebenenfalls b+., e+. und g+. für eine nachfolgende dritte Position an Stelle der zweiten Position ($P_2$) ausgeführt werden.

10. Verfahren nach Anspruch 7, soweit dieser auf Anspruch 6 rückbezogen ist, wobei das oder die Mittel mittels einer gewichteten Mittelwertbildung auf Grund des mit Unsicherheiten ($U_{P*}$) beaufschlagten wenigstens einen Schnittpunkts (P*) und der mit Unsicherheiten ($U_{Pexp}$) beaufschlagten erwarteten zweiten Position ($P_{exp}$) bestimmt werden.

11. Verfahren nach einem der vorherigen Ansprüche, wobei die Schritte b+., e+. und/oder g+. in vorbestimmten zeitlichen oder räumlichen Abständen wiederholt werden.

12. Verfahren nach einem der vorherigen Ansprüche, wobei die virtuelle Repräsentation eine zweidimensionale oder dreidimensionale Karte ist.

13. Speichermedium mit darin gespeicherten Befehlen zur Steuerung eines Prozessors, die bei Ausführung mittels eines Prozessors ein Verfahren nach einem der Ansprüche 1 bis 12 implementieren.

**14.** Vorrichtung (1) aufweisend: Speichermittel, Datenverarbeitungsmittel enthaltend wenigstens einen Prozessor, wenigstens eine Antriebseinheit zur Fortbewegung der Vorrichtung, wenigstens einen Sensor (2) zur Erfassung von Richtungs-Informationen und, optional, wenigstens einen Orientierungssensor (3) zur Erfassung von Orlentierungs-Informationen,
**dadurch gekennzeichnet, dass**
die Speichermittel Befehle zur Steuerung eines Prozessors enthalten, die bei Ausführung mittels des Prozessors ein Verfahren nach einem der Ansprüche 1 bis 13 implementieren, und wobei
die Datenverarbeitungsmittel die wenigstens eine Antriebseinheit zur Bewegung der Vorrichtung gemäß Schritt d, ansteuern,

**Claims**

**1.** A method for determining a position of a moveable object within a virtual representation of a space, comprising the steps:

a. providing a virtual representation of a space, including information on the position of at least one reference point (m1, m2, m3, m4), which is largely equivalent to a corresponding reference marker (M1, M2, M3, M4) within the space, **characterized by** the following further steps:

b. calculating an expected second position ($P_{exp}$) of the object (1) within the virtual representation, based on an actual first position ($P_1$) and on one or multiple drive parameters of one or multiple drive units of the moveable object;

c. calculating the expected angle information (a11, a12) of the position of at least one reference point (m1, m2, m3, m4) in relation to an axis (5) of the object (1) at the expected second position ($P_{exp}$) within the virtual representation;

d. moving the moveable object (1) in the space to a second position ($P_2$), which corresponds to the expected second position ($P_{exp}$), based on the drive parameter or parameters, in particular the velocity and the direction, of the one or multiple drive units of the moveable object (1);

e. at the second position, determining the directional information (A11, A21) of the at least one reference marker (M1, M2, M3, M4) in the space in relation to the axis (5) of the object (1) via at least one sensor (2), which is linked with the moveable object (1), in particular linked via a communication interface;

f. identifying n reference markers (M1, M2) on the basis of that calculated expected angle information for which the determined directional information (A11, A21) provides a clear distinctness of the respective reference markers (M1, M2), namely a clear assignability of the directional information (A11, A21) to a respective reference marker (M1, M2, M3, M4);

g. using the determined directional information (A11, A21) of the at least one identified reference marker (M1, M2) and the expected second position ($P_{exp}$) of the object (1) to determine an estimated second position ($P_{2*}$) of the moveable object (1) within the virtual representation, wherein the steps a. to g. are repeated within defined temporal or spatial intervals.

**2.** The method according to Claim 1, furthermore comprising the steps:

b+. calculating an expected second orientation of the axis (5) of the object (1) within the virtual representation, based on a current first orientation of the axis (5) of the object (1) and on the one drive parameter or multiple drive parameters of the one or multiple drive units of the moveable object; and

g+. using the determined directional information (A11, A21) of the at least one identified reference marker (M1, M2) and the expected second orientation of the axis (5) of the object (1) to determine an estimated second orientation of the axis (5) of the moveable object (1) within the virtual representation.

**3.** The method according to Claim 1, furthermore comprising the steps:

b+. calculating an expected second orientation of the axis (5) of the object (1) within the virtual representation, based on a current first orientation of the axis (5) of the object (1) and on the one drive parameter or multiple drive parameters of the one or multiple drive units of the moveable object;

e+. at the second position ($P_2$), determining the orientation information of the object (1) via at least one orientation sensor (3), which is linked to the moveable object; and

g+. using the determined orientation information and the expected second orientation of the object (1) to determine an estimated second orientation of the moveable object (1) within the virtual representation.

4. The method according to one of the preceding claims, wherein,

   a. in case n=1, a plurality of possible positions within the virtual representation is determined, from which the identified reference marker (M1) appears under the calculated directional information, wherein the plurality of the possible positions lie on a straight line (g);
   b. in case n=2, a plurality of possible positions within the virtual representation is determined, from which the identified reference markers appear under their calculated directional information, wherein the plurality of the possible positions lie on a circular arc (K1); and
   c. in case n>2, a plurality of possible positions within the virtual representation is determined, from which two respective identified reference markers appear under their calculated directional information, wherein the plurality of the possible positions lie on a plurality of circular arcs (K1, K2, K3).

5. The method according to Claim 4, wherein the determination of the estimated second position ($P_{2*}$) of the moveable object (1) within the virtual representation is conducted with the aid of the perpendicular (L) from the expected second position ($P_{exp}$) of the object (1) to the plurality of possible positions to define at least one intercept (P*).

6. The method according to Claim 5, wherein, in case only one intercept (P*) is calculated, the mean of the expected second position ($P_{exp}$) and the intercept (P*) defines the estimated second position ($P_2$*), and in case multiple intercepts (P*) are calculated, the centroid of all means of the expected second position ($P_{exp}$) and each respective intercept (P*) defines the estimated second position ($P_2$*).

7. The method according to one of the preceding claims, wherein the information regarding the position of reference markers, the current first position ($P_1$), the drive parameter or parameters of the one or multiple drive units, the expected second position ($P_{exp}$), the expected angle information (a11, a21), the directional information (A11, A21), the estimated second position ($P_{2*}$), the current first orientation, the expected second orientation, the orientation information, the estimated second orientation, the plurality of possible positions, the at least one intercept (P*), the at least one mean and/or the centroid are defined by values subject to uncertainties ($U_{m1}$, $U_{P1}$, $U_{Pexp}$, $U_{P*}$, $U_{P2*}$), and wherein these uncertainties are considered and preferably propagated in the method steps b. to g. and, if applicable, b+., e+. and g+., and wherein these uncertainties in particular are propagated using Gaussian error propagation.

8. The method according to one of the preceding claims, wherein the determined directional information (A11, A21) does not provide a clear distinctness of the reference markers (M3, M4) if the determined directional information (A11, A21) can be associated with more than one reference marker (50), and in particular if this is a result of the uncertainties and/or their propagation.

9. The method according to one of the preceding claims, wherein, in case that n=0, the steps b. to g. and, if applicable, b+., e+. and g+. are conducted for a subsequent third position instead of the second position ($P_2$).

10. The method according to Claim 7, insofar as this claim relates to Claim 6, wherein the mean or the means is/are determined via a weighted mean-value formation based on the at least one intercept (P*) subject to uncertainties (Up*) and the expected second position ($P_{exp}$) subject to uncertainties ($U_{exp}$).

11. The method according to one of the preceding claims, wherein the steps b+., e+. and/or g+. are repeated at defined temporal or spatial intervals.

12. The method according to one of the preceding claims, wherein the virtual representation is a two-dimensional or three-dimensional map.

13. A storage medium with commands for controlling a processor stored in said medium, said commands implementing a method according to one of the Claims 1 to 12 via a processor when executed.

14. A device (1) comprising: storage means, data processing means containing at least one processor, at least one drive unit for moving the device, at least one sensor (2) for capturing directional information and, optionally, at least one orientation sensor (3) for capturing orientation information, **characterized in that** the storage means contain commands for controlling a processor, which implement a method according to one of the Claims 1 to 13 via a processor when executed, and wherein the data processing means control the at least one drive unit for moving the device according to step d.

## Revendications

1. Procédé en vue de la détermination d'une position d'un objet mobile au sein d'une représentation virtuelle d'une pièce, présentant les étapes de :

   a. mise à disposition d'une représentation virtuelle d'une pièce avec des informations sur la position d'd'au moins un point de référence (m1, m2, m3, m4), qui correspond pour l'essentiel à la position d'un marqueur de référence correspondant (M1, M2, M3, M4) dans la pièce ;
   **caractérisé par** les autres étapes suivantes :
   b. calcul d'une seconde position attendue ($P_{exp}$) de l'objet (1) au sein de la représentation virtuelle, en se basant sur une première position ($P_1$) actuelle et sur un ou plusieurs paramètres d'entraînement d'une ou plusieurs unités d'entraînement de l'objet mobile ;
   c. calcul des informations d'angle attendues (a11, a12) de la position d'au moins un point de référence (m1, m2, m3, m4) par rapport à un axe (5) de l'objet (1) à la seconde position attendue ($P_{exp}$) au sein de la représentation virtuelle ;
   d. déplacement de l'objet mobile (1) dans la pièce vers une seconde position (P2), qui correspond à la seconde position attendue ($P_{exp}$), en se basant sur le ou les paramètres d'entraînement, notamment la vitesse et la direction, de l'une ou des plusieurs unités d'entraînement de l'objet mobile (1) ;
   e. sur la seconde position, détermination des informations de direction (A11, A21) d'au moins l'un des marqueurs de référence (M1, M2, M3, M4) dans la pièce par rapport à l'axe (5) de l'objet (1), par au moins un capteur (2), qui est relié avec l'objet mobile (1), notamment via une connexion de communication ;
   f. identification de n marqueurs de référence (M1, M2) en raison des informations d'angle calculées attendues, pour lesquelles les informations de direction déterminées (A11, A21) permettent une différenciation univoque du marqueur de référence respectif (M1, M2), à savoir une affectation univoque des informations de direction (A11, A21) à un marqueur de référence respectif (M1, M2, M3, M4) ;
   g. utilisation des informations de direction déterminées (A11, A21) d'au moins l'un des marqueurs de référence identifiés (M1, M2) et de la seconde position attendue ($P_{exp}$) de l'objet (1), afin de définir une seconde position approchée ($P_{2*}$) de l'objet mobile (1) au sein de la représentation virtuelle,

   les étapes a. à g. étant répétées dans des écarts temporels ou spatiaux prédéfinis.

2. Procédé selon la revendication 1, présentant par ailleurs les étapes de :

   b+. calcul d'une seconde orientation attendue de l'axe (5) de l'objet (1) au sein de la représentation virtuelle en se basant sur une première orientation actuelle de l'axe (5) de l'objet (1) et sur l'un ou des plusieurs paramètres d'entraînement de l'une ou des plusieurs unités d'entraînement de l'objet mobile ; et
   g+. utilisation des informations de direction déterminées (A11, A21) d'au moins un marqueur de référence identifié (M1, M2) et de la seconde orientation attendue de l'axe (5) de l'objet (1), afin de définir une seconde orientation approchée de l'axe (5) de l'objet mobile (1) au sein de la représentation virtuelle.

3. Procédé selon la revendication 1, présentant par ailleurs les étapes de :

   b+. calcul d'une seconde orientation attendue de l'axe (5) de l'objet (1) au sein de la représentation virtuelle en se basant sur une première orientation actuelle de l'axe (5) de l'objet (1) et sur l'un ou les plusieurs paramètres d'entraînement de l'une ou des plusieurs unités d'entraînement de l'objet mobile ;
   e+. sur la seconde position ($P_2$), détermination des informations d'orientation de l'objet (1) au moyen d'au moins un capteur d'orientation (3), qui est relié avec l'objet mobile (1) ; et
   g+. utilisation des informations d'orientation déterminées et de la seconde orientation attendue de l'objet (1), afin de définir une seconde orientation approchée de l'objet mobile (1) au sein de la représentation virtuelle.

4. Procédé selon une quelconque des revendications précédentes,

   a. une majorité de positions possibles étant déterminée au sein de la représentation virtuelle pour le cas où n = 1, à partir desquelles le marqueur de référence identifié (M1) apparaît sous les informations de direction déterminées, la majorité des positions possibles se trouvant sur une droite (g) ;
   b. une majorité de positions possibles étant déterminée au sein de la représentation virtuelle pour le cas où n = 2, à partir desquelles les marqueurs de référence identifiés apparaissent sous leurs informations de direction déterminées, la majorité des positions possibles se trouvant sur un arc de cercle (Kl) ; et

c. une majorité de positions possibles étant déterminée au sein de la représentation virtuelle pour le cas où n > 2, à partir desquelles respectivement deux des marqueurs de référence identifiés apparaissent sous leurs informations de direction déterminées, la majorité des positions possibles se trouvant sur une pluralité d'arcs de cercle (K1, K2, K3).

5. Procédé selon la revendication 4, la définition de la seconde position approchée ($P_{2*}$) de l'objet mobile (1) au sein de la représentation virtuelle s'effectuant à l'aide de la verticale (L) à partir de la seconde position attendue ($P_{exp}$) de l'objet (1) sur la majorité des positions possibles en vue de la détermination d'au moins un point d'intersection ($P^*$).

6. Procédé selon la revendication 5, pour le cas de la détermination seulement d'un point d'intersection ($P^*$), la moyenne de la seconde position attendue ($P_{exp}$) et du point d'intersection ($P^*$) définissant la seconde position approchée ($P_{2*}$), et pour le cas de la détermination de plusieurs points d'intersection ($P^*$), le point central de toutes les moyennes de la seconde position attendue ($P_{exp}$) et respectivement d'un point d'intersection ($P^*$) définissant la seconde position approchée ($P_{2*}$).

7. Procédé selon une quelconque des revendications précédentes, les informations sur la position des marqueurs de référence, la première position actuelle ($P_1$), le ou les paramètres d'entraînement de l'une ou des plusieurs unités d'entraînement, la seconde position attendue ($P_{exp}$), les informations d'angle attendues (a11, a21), les informations de direction (A11, A21), la seconde position approchée ($P_{2*}$), la première orientation actuelle, la seconde orientation attendue, les informations d'orientation, la seconde orientation approchée, la majorité des positions possibles, au moins l'un des points d'intersection ($P^*$), au moins l'une des moyennes et/ou le point central étant définis par des valeurs alimentées par des incertitudes ($U_{m1}$, $U_{P1}$, $U_{Pexp}$, $U_{P^*}$, $U_{P2*}$), et ces incertitudes étant prises en compte aux étapes du procédé b. à g. et, le cas échéant b+., e+. et g+. et propagées de préférence, et notamment reproduites au moyen de la propagation des erreurs de Gauss.

8. Procédé selon une quelconque des revendications précédentes, les informations de direction déterminées (A11, A21) ne permettant pas une différenciation possible univoque de marqueurs de référence (M3, M4) lorsque les informations de direction déterminées (A11, A21) pourraient appartenir à plus d'un marqueur de référence (50), et notamment lorsque ceci est un résultat des incertitudes et/ou de leur propagation.

9. Procédé selon une quelconque des revendications précédentes, les étapes de la b. à la g. et, le cas échéant, la b+., la e+. et la g+. étant, pour le cas où n = 0, exécutées pour une troisième position suivante au lieu de la seconde position ($P_2$).

10. Procédé selon la revendication 7, si celui-ci se réfère à la revendication 6, la ou les moyennes étant définies au moyen d'un calcul pondéré de valeur moyenne sur la base d'au moins l'un des points d'intersection ($P^*$) alimenté en incertitudes ($U_{P^*}$) et de la seconde position attendue ($P_{exp}$) alimenté en incertitudes ($U_{Pexp}$).

11. Procédé selon une quelconque des revendications précédentes, les étapes b+., e+. et/ou g+. étant répétées dans des écarts temporels ou spatiaux prédéfinis.

12. Procédé selon une quelconque des revendications précédentes, la représentation virtuelle étant une carte bidimensionnelle ou tridimensionnelle.

13. Support d'enregistrement avec des instructions enregistrées dessus en vue de la commande d'un processeur, qui lors de l'exécution au moyen d'un processeur, réalisent un procédé selon une quelconque des revendications 1 à 12.

14. Dispositif (1) présentant : des supports d'enregistrement, des supports de traitement des données contenant au moins un processeur, au moins une unité d'entraînement en vue du déplacement du dispositif, au moins un capteur (2) en vue de la saisie d'informations de direction, et, en option, au moins un capteur d'orientation (3) en vue de la saisie d'informations d'orientation,
**caractérisé en ce que**
les supports d'enregistrement contiennent des instructions en vue de la commande d'un processeur, qui lors de l'exécution au moyen du processeur, réalisent un procédé selon une quelconque des revendications 1 à 13, et
les supports de traitement des données amorçant au moins l'une des unités d'entraînement en vue du mouvement du dispositif selon l'étape d.

100

Start

101

Bereitstellen von Positions-
Informationen

102

Berechnen einer erwarteten
zweiten Position und
von Winkel-Informationen

103

Bewegen des beweglichen
Objekts zu einer zweiten Position

104

Ermitteln von Richtungs-
Informationen und Identifizieren
von Referenz-Markern

105

Bestimmen einer genäherten
zweiten Position

106

Ende

Fig. 1

Fig. 2a

Fig. 2b

Fig. 3

Fig. 4a

Fig. 4b

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1450228 A